(19) Europäisches Patentamt / European Patent Office / Office européen des brevets

(11) **EP 4 501 851 A1**

(12) **EUROPEAN PATENT APPLICATION**
published in accordance with Art. 153(4) EPC

(43) Date of publication:
**05.02.2025 Bulletin 2025/06**

(21) Application number: **23780618.7**

(22) Date of filing: **28.03.2023**

(51) International Patent Classification (IPC):
*C01B 39/46* (2006.01)    *B01D 53/04* (2006.01)
*B01D 53/047* (2006.01)    *B01J 20/18* (2006.01)
*B01J 20/30* (2006.01)    *B01J 20/34* (2006.01)

(52) Cooperative Patent Classification (CPC):
**B01D 53/04; B01D 53/047; B01J 20/18;
B01J 20/30; B01J 20/34; C01B 39/46;** Y02C 20/40

(86) International application number:
**PCT/JP2023/012688**

(87) International publication number:
**WO 2023/190609 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022053915**

(71) Applicant: **Asahi Kasei Kabushiki Kaisha
Tokyo 1000006 (JP)**

(72) Inventors:
• **OHKUBO, Atsushi**
  **Tokyo 100-0006 (JP)**
• **KAJIWARA, Emi**
  **Tokyo 100-0006 (JP)**
• **SUZUE, Yuji**
  **Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **ZEOLITE MOLDED ARTICLE, ADSORPTION DEVICE, METHOD FOR PRODUCING PURIFIED GAS, AND METHOD FOR PRODUCING ZEOLITE MOLDED ARTICLE**

(57) A zeolite formed body including a zeolite capable of adsorbing carbon dioxide, in which the zeolite formed body has an apparent density d of 0.75 or more.

Figure 1

EP 4 501 851 A1

# EP 4 501 851 A1

**Description**

Technical Field

The present invention relates to a zeolite formed body, an adsorption system, a method for producing a purified gas, and a method for producing a zeolite formed body.

Background Art

Zeolite can be used for adsorbents, desiccants, separating agents, catalysts, catalyst carriers, detergent aids, ion exchangers, waste water treatment agents, fertilizers, food additives, cosmetic additives and the like, and, in particular, is useful in gas separation applications.

For example, a zeolite having a GIS structure in codes for directing zeolite structures specified by the IZA (International Zeolite Association) is called a GIS-type zeolite. A GIS-type zeolite is a zeolite having a pore constituted by an oxygen 8-membered ring. Such a GIS-type zeolite is, for example, a GIS-type zeolite having adsorption ability of carbon dioxide, synthesized as shown in Patent Literature 1, in which the GIS-type zeolite is used for separation, recovery, and purification of carbon dioxide when used as an adsorbent.

Citation List

Patent Literatures

Patent Literature 1: International Publication No. WO2019/202933

Summary of Invention

Technical Problem

In a case where carbon dioxide is separated, recovered, or purified with an adsorbent, a pressure swing-type adsorption-separation method, a temperature swing-type adsorption-separation method, a pressure/temperature swing-type adsorption-separation method, or the like is used. Zeolite is packed in a column or the like and then used in such a method. Zeolite is shaped and then used as a pellet-like zeolite formed body in order not to cause any fine-powder-like zeolite to be accumulated in a flow path in an system and clog the flow path. Such a zeolite formed body is demanded to have, as performance, sufficient durability to use conditions.

A problem has been found. When a zeolite formed body including a zeolite capable of adsorbing carbon dioxide, adsorbs a larger amount of carbon dioxide, the formed body is embrittled, when the formed body is pellet-like, the formed body is powderized. Such embrittlement causes a fine powder generated in an adsorption system, making continuous running of the system difficult due to pressure loss or the like.

An object of the present invention is to provide a zeolite formed body excellent in embrittlement resistance to adsorption of carbon dioxide, an adsorption system including the zeolite formed body, a method for producing a purified gas, using the zeolite formed body, and a method for producing a zeolite formed body.

Solution to Problem

The present inventors have made intensive studies in order to solve the above problems, and as a result, have found that the above problems can be solved in a case where the density of a zeolite formed body including zeolite is within a predetermined range, leading to completion of the present invention.

That is, the present invention includes the following embodiments.

<1> A zeolite formed body comprising a zeolite capable of adsorbing carbon dioxide, wherein
the zeolite formed body has an apparent density $d_a$ of 0.75 or more.
<2> The zeolite formed body according to <1>, wherein the zeolite has a carbon dioxide adsorption capacity of 10 $cm^3/g$ or more.
<3> The zeolite formed body according to <1> or <2>, wherein a ratio of apparent density $d_a$/true density dt in the zeolite formed body is 0.36 or more.
<4> The zeolite formed body according to any one of <1> to <3>, wherein a ratio of bulk density $d_b$/true density dt in the zeolite formed body is 0.25 or more.
<5> The zeolite formed body according to any one of <1> to <4>, wherein an adsorption selectivity in terms of carbon dioxide adsorption capacity/second component gas adsorption capacity into the zeolite is 10 or more.

<6> The zeolite formed body according to any one of <1> to <5>, wherein the zeolite is a GIS-type zeolite.

<7> The zeolite formed body according to <6>, wherein the GIS-type zeolite has a silica/alumina ratio of 3.40 or more.

<8> The zeolite formed body according to <6> or <7>, comprising potassium or lithium as cationic species in the GIS-type zeolite.

<9> The zeolite formed body according to any one of <6> to <8>, wherein a ratio (Z/T) of a total value (Z) of amount of substance of potassium and lithium to a total value (T) of amount of substance of alkali metals in the GIS-type zeolite is 0.05 or more.

<10> The zeolite formed body according to any one of <6> to <9>, comprising a GIS-type zeolite satisfying $(a + d)/(b + c) \geq 0.192$, wherein area intensities of peaks assigned to Q4(3Al), Q4(2Al), Q4(1Al), and Q4(0Al) observed in a $^{29}$Si-MAS-NMR spectrum are respectively defined as a, b, c, and d.

<11> The zeolite formed body according to any one of <1> to <10>, comprising a carrier.

<12> The zeolite formed body according to <11>, wherein the carrier comprises an inorganic binder and an organic binder.

<13> The zeolite formed body according to <11> or <12>, wherein a total content of the carrier is 1 to 99% by mass based on a total amount (100% by mass) of the zeolite formed body.

<14> The zeolite formed body according to any one of <1> to <13>, having a degree of weight reduction per 1.2 g under conditions of 300°C and 2 hours, of 1.0 or less.

<15> The zeolite formed body according to any one of <1> to <14>, having an aspect ratio of 1 to 10.

<16> The zeolite formed body according to any one of <1> to <15>, having a cylindrical shape.

<17> The zeolite formed body according to <16>, having a length of 3 mm or more and 30 mm or less and a diameter of 1 mm or more and 30 mm or less.

<18> The zeolite formed body according to any one of <1> to <15>, having a spherical shape.

<19> The zeolite formed body according to <18>, having a diameter of 3 mm or more and 10 mm or less.

<20> An adsorption system comprising the zeolite formed body according to any one of <1> to <19>.

<21> A method for producing a purified gas, comprising a separation step of separating one or more selected from the group consisting of $CO_2$, $H_2O$, He, Ne, $Cl_2$, $NH_3$, and HCl from a mixture including two or more gases selected from the group consisting of $H_2$, $N_2$, $O_2$, Ar, CO, and hydrocarbon, by use of the adsorption system according to <20>.

<22> The method for producing a purified gas according to <21>, wherein the gas separation is performed by a pressure swing-type adsorption-separation method, a temperature swing-type adsorption-separation method, or a pressure/temperature swing-type adsorption-separation method in the separation step.

<23> A method for producing a purified gas by separation of carbon dioxide and a second component gas different from carbon dioxide, from a gas mixture including the carbon dioxide and the second component gas, by use of an adsorption tower, the method comprising

an adsorption step of introducing the gas mixture into the adsorption tower and allowing an adsorbent to adsorb carbon dioxide, to take out the second component gas, and
a desorption step of evacuating carbon dioxide from the adsorption tower, to take out the carbon dioxide from the adsorbent, wherein
the adsorption tower is packed with an adsorbent including the zeolite formed body according to any one of <1> to <22>.

<24> The method for producing a purified gas according to <23>, wherein the adsorption step and the desorption step are each repeatedly performed plural times or more.

<25> A method for producing a zeolite formed body, comprising

a starting material mixing step (X) of mixing a zeolite capable of adsorbing carbon dioxide, and a carrier including an inorganic binder and an organic binder, to perform preparation,
a molding treatment step (Y) of subjecting the prepared starting material to molding treatment to thereby obtain a precursor, and
a calcining step (Z) of calcining the precursor, to provide a zeolite formed body.

Advantageous Effects of Invention

The present invention can provide a zeolite formed body excellent in embrittlement resistance to adsorption of carbon dioxide, an adsorption system including the zeolite formed body, a method for producing a purified gas, using the zeolite formed body, and a method for producing a zeolite formed body.

Brief Description of Drawings

[Figure 1] Figure 1 is a view exemplifying an adsorption system according to the present embodiment.
[Figure 2] Figure 2 is a view exemplifying a schematic configuration of a purified gas production system 100 according to the present embodiment.
[Figure 3] Figure 3 is a schematic view illustrating the respective changes in pressure variation over time of a carbon dioxide adsorption tower and a carbon dioxide adsorption tower due to the operation of the purified gas production system 100.
[Figure 4] Figure 4 is a view exemplifying a gas separation performance evaluation system in the present invention.

Description of Embodiments

Hereinafter, an embodiment for carrying out the present invention (hereinafter, referred to as "the present embodiment".) will be described in detail. The present invention is not limited to the following description, and can be variously modified and carried out within the gist thereof. Herein, for example, the expression of a numerical value range of "1 to 100" encompasses both a lower limit value of "1" and an upper limit value of "100". The same also applies to the expression of any other numerical value range.

[Zeolite formed body]

A zeolite formed body according to the present embodiment includes a zeolite capable of adsorbing carbon dioxide, in which the zeolite formed body has an apparent density $d_a$ of 0.75 or more. The zeolite formed body according to the present embodiment is excellent in embrittlement resistance to adsorption of carbon dioxide. It is considered that, according to the present embodiment, the zeolite formed body can be reduced in maximum stress generated depending on expansion/contraction of the zeolite itself by densification with an increase in density and control of the amount of voids present in the zeolite formed body, and there can be thus provided a zeolite formed body having durability against degradation due to expansion/contraction, an adsorption system including the zeolite formed body, a method for producing a purified gas, using the zeolite formed body, and a method for producing a zeolite formed body.

The apparent density $d_a$ ($g/cm^3$) of the zeolite formed body is 0.75 or more, preferably 0.78 or more, more preferably 0.80 or more from the viewpoint of an enhancement in embrittlement resistance to adsorption of carbon dioxide. The apparent density $d_a$, although the upper limit thereof is not particularly limited, for example, may be 3.20 or less, may be 2.80 or less, or may be 2.50 or less. The apparent density $d_a$ may be adjusted within a predetermined range by, for example, selection of carrier species described below.

The bulk density $d_b$ ($g/cm^3$) of the zeolite formed body is preferably 0.20 or more, more preferably 0.40 or more, further preferably 0.50 or more from the viewpoint of allowing for gas separation in a smaller system. The bulk density $d_b$, although the upper limit thereof is not particularly limited, for example, may be 3.00 or less, may be 2.50 or less, or may be 1.50 or less. The bulk density $d_b$ may be adjusted within a predetermined range by, for example, adjustment of the size of a formed body described below.

The true density dt ($g/cm^3$) of zeolite formed body, for example, may be 1.00 to 4.00, may be 1.50 to 3.50, or may be 2.00 to 3.00. The true density dt may be adjusted within a predetermined range by, for example, selection of carrier species described below and/or adjustment of the amount of addition of such a carrier.

The apparent density $d_a$/true density dt in the zeolite formed body is preferably 0.36 or more, more preferably 0.42 or more, further preferably 0.50 or more from the viewpoint of enhancements in recovery purity of carbon dioxide and recovery rate of a second component gas. The apparent density $d_a$/true density dt is less than 1.0, preferably 0.90 or less, more preferably 0.80 or less, further preferably 0.70 or less. In a case where carbon dioxide is separated by the zeolite formed body, for example, there is a method which includes allowing carbon dioxide to flow, thereby adsorbing carbon dioxide with the zeolite formed body, and then desorbing carbon dioxide by pressure reduction. It has been here found that, in such a separation method, the recovery purity of carbon dioxide and the recovery rate of a second component gas each cannot exceed any certain level and the values thereof are lowered. If the recovery purity of carbon dioxide and the recovery rate of a second component gas are lower, the recovery purity of carbon dioxide and the recovery rate of a second component gas are to be increased by repeatedly treating such gases, resulting in an increase in cost for gas purification. It has been found about the above problems that, if voids are present in the zeolite formed body through which carbon dioxide passes during its adsorption-desorption, a second component gas in the state of not being adsorbed remains in an adsorption tower and thus the recovery purity of carbon dioxide cannot be increased. It has been further found that the remaining second component gas in voids cannot be recovered as a purified gas and thus the recovery rate of a second component gas cannot also be increased. It is then considered that the apparent density $d_a$/true density dt in the zeolite formed body can be within the above range to allow for a reduction in proportion of voids in the zeolite formed body, thereby leading to a reduction in amount of the remaining gas and thus resulting in increases in recovery purity of carbon dioxide and recovery rate of a second component gas. The apparent density $d_a$/true density dt may be adjusted within a predetermined range by, for example, selection of a carrier described below and/or selection of a granulating method.

The "second component gas" means a gas which is other than carbon dioxide and which is gaseous under conditions of a temperature of 25°C and a pressure of 0.10 MPa. Examples of the second component gas include $H_2$, $N_2$, $O_2$, Ar, CO, and hydrocarbon. The hydrocarbon is not particularly limited, and examples thereof include methane, ethane, ethylene, propane, propylene, 1-butene, 2-butene, 2-methylpropene, dimethyl ether, and acetylene.

The bulk density $d_b$/true density dt in the zeolite formed body is preferably 0.25 or more, more preferably 0.30 or more, further preferably 0.35 or more from the viewpoint of enhancements in recovery purity of carbon dioxide and recovery rate of the second component gas. The bulk density $d_b$/true density dt, although the upper limit thereof is not particularly limited, is less than 1.0, preferably 0.90 or less, more preferably 0.70 or less, further preferably 0.60 or less. It has been found that voids present between such zeolite formed bodies through which carbon dioxide passes during its adsorption-desorption also cause a gas not absorbed to remain in an adsorption tower and thus the recovery purity of carbon dioxide cannot be increased. It has been further found that the remaining second component gas in voids between such formed bodies cannot also be recovered as a purified gas and thus the recovery rate of the second component gas cannot be increased. It is then considered that the bulk density $d_b$/true density dt in the zeolite formed body can be within the above range to allow for a reduction in proportion of voids between such zeolite formed bodies, thereby leading to a reduction in proportion of voids between such zeolite formed bodies, thereby leading to a reduction in amount of the remaining gas and thus resulting in increases in recovery purity of carbon dioxide and recovery rate of the second component gas. The bulk density $d_b$/true density dt may be adjusted within a predetermined range by, for example, selection of a carrier described below, adjustment of the size of a formed body, and/or selection of a granulating method.

The methods for measuring the above apparent density $d_a$, bulk density $d_b$, and true density dt are according to methods described in Examples.

(Zeolite)

The zeolite preferably has a carbon dioxide adsorption capacity of 10 $cm^3$/g or more. The carbon dioxide adsorption capacity of the zeolite is preferably 20 $cm^3$/g or more, more preferably 40 $cm^3$/g or more, further preferably 50 $cm^3$/g or more. The carbon dioxide adsorption capacity of the zeolite, although the upper limit thereof is not particularly limited, is, for example, 100 $cm^3$/g or less.

The adsorption selectivity in terms of carbon dioxide adsorption capacity/second component gas adsorption capacity into the zeolite is preferably 10 or more, more preferably 13 or more, further preferably 15 or more from the viewpoint of a more enhancement in recovery purity of carbon dioxide. The adsorption selectivity in terms of carbon dioxide adsorption capacity/second component gas adsorption capacity into the zeolite, although the upper limit thereof is not particularly limited, is, for example, 100 or less. The amounts of adsorption of gases such as carbon dioxide and the second component gas are each the volume ($cm^3$) of adsorption of carbon dioxide per gram of the zeolite at 25°C. The amount is more specifically measured by a method described in Examples.

The adsorption selectivity in terms of carbon dioxide adsorption capacity/ methane adsorption capacity into the zeolite is preferably 10 or more, more preferably 13 or more, further preferably 15 or more from the viewpoint of a more enhancement in recovery purity of carbon dioxide. The adsorption selectivity in terms of carbon dioxide adsorption capacity/methane adsorption capacity into the zeolite, although the upper limit thereof is not particularly limited, is, for example, 100 or less.

The adsorption selectivity in terms of carbon dioxide adsorption capacity/nitrogen adsorption capacity into the zeolite is preferably 10 or more, more preferably 13 or more, further preferably 15 or more from the viewpoint of a more enhancement in recovery purity of carbon dioxide. The adsorption selectivity in terms of carbon dioxide adsorption capacity/nitrogen adsorption capacity into the zeolite, although the upper limit thereof is not particularly limited, is, for example, 100 or less.

Examples of the zeolite capable of adsorbing carbon dioxide include a GIS-type zeolite, a FAU-type zeolite, and a MWF-type zeolite. Among them, a GIS-type zeolite is preferable.

As the silica/alumina ratio (which represents the molar ratio of silica and alumina, represented by $SiO_2$/$Al_2O_3$, and which is hereinafter also simply referred to as "SAR") of the GIS-type zeolite according to the present embodiment is lower, the zeolite is more hydrophilic and has a stronger adsorption force of a polar molecule such as carbon dioxide. A higher SAR is more preferred because a lower SAR causes a so strong adsorption force that energy necessary for desorption by heating or vacuuming is larger. The SAR of the GIS-type zeolite is preferably 3.40 or more, more preferably 4.40 or more, more preferably 4.50 or more, further preferably 4.69 or more, further preferably 4.90 or more, further preferably 5.40 or more, further preferably 6.01 or more. While the upper limit of the SAR is not particularly limited, a too high SAR leads to small interaction with an adsorbate and thus the SAR of the GIS-type zeolite is preferably 3000 or less, more preferably 500 or less, further preferably 100 or less. The SAR of the zeolite in the zeolite formed body is determined by measurement of $^{29}$Si-MAS-NMR. The SAR can be more specifically measured by a method described in Examples described below. The SAR can be adjusted with, for example, the ratio between the amounts of water and OH- in a mixed gel.

While the SAR is preferably higher from the viewpoint of the energy necessary for desorption, it is confirmed that, when the SAR in the GIS-type zeolite is higher, an adsorption-desorption hysteresis in an adsorption-desorption isotherm of carbon dioxide is exhibited. In the GIS-type zeolite according to the present embodiment, the binding modes of Si and Al in the zeolite backbone can be controlled to eliminate an adsorption-desorption hysteresis in an adsorption-desorption isotherm of carbon dioxide. Specifically, when the area intensities of peaks assigned to Q4(3Al), Q4(2Al), Q4(1Al) and Q4(0Al) observed in a $^{29}$Si-MAS-NMR spectrum are respectively defined as a, b, c and d, and $(a + d)/(b + c) \geq 0.192$ is preferably satisfied, $0.913 \geq (a + d)/(b + c) \geq 0.195$ is more preferably satisfied, and $0.519 \geq (a + d)/(b + c) \geq 0.199$ is further preferably satisfied. The peaks including Q4(3Al), Q4(2Al), Q4(1Al) and Q4(0Al) observed in a $^{29}$Si-MAS-NMR spectrum represent the binding modes of Si and Al in the zeolite backbone, each of (a + d), (b + c), representing the sum of the area intensities, represents the sum of the amounts of presence of the binding modes, and (a + d)/(b + c) represents the abundance ratio. The abundance ratio of the binding modes of Si and Al has an influence on the change in structure of the zeolite backbone itself at each time of adsorption and desorption, and thus "(a + d)/(b + c)" as the abundance ratio of the binding modes of Si and Al in the zeolite backbone can be within an appropriate range to eliminate an adsorption-desorption hysteresis in an adsorption-desorption isotherm. The (a + d)/(b + c) can be measured by a method described in Examples described below. The (a + d)/(b + c) can be within a predetermined range by, for example, addition of a salt compound including an alkali metal and/or an alkaline earth metal and adjustment of the ratio between the amount of a cation resulting from such addition of the salt compound and the amount of an aluminum source.

The cationic species contained in the GIS-type zeolite is preferably potassium or lithium, more preferably potassium, from the viewpoint of an enhancement in selective adsorption ability of carbon dioxide. The total content of potassium and lithium in the zeolite is calculated as the ratio (Z/T) of the total value (Z) of the amount of substance of potassium and lithium to the total value (T) of the amount of substance of alkali metals in the GIS-type zeolite. The Z/T is preferably 0.05 or more, more preferably 0.10 or more, further preferably 0.15 or more. The upper limit of the Z/T is not particularly limited, and the Z/T may be 1.00 or less. The Z/T can be measured by thermally dissolving the zeolite in an aqueous sodium hydroxide solution or aqua regia, appropriately diluting the resultant to provide a liquid, and subjecting the liquid to ICP-emission spectrochemical analysis. The Z/T can be more specifically measured by a method described in Examples below. The Z/T can be adjusted by changing the proportions of potassium and lithium as cationic species of the GIS-type zeolite.

The ratio (K/T) of the total value (K) of the amount of substance of potassium to the total value (T) of the amount of substance of alkali metals in the GIS-type zeolite is preferably 0.05 or more, more preferably 0.10 or more, further preferably 0.15 or more. The upper limit of the K/T is not particularly limited and the K/T may be 1.00 or less.

The degree of weight reduction per 1.2 g of the GIS-type zeolite, under conditions of 300°C and 2 hours, is preferably 1.0 or less. When the degree of weight reduction is 1.0 or less, high-temperature durability is enhanced. The degree of weight reduction is preferably 0.5 or less, more preferably 0.2 or less, further preferably 0.1 or less.

The degree of weight reduction is determined by a measurement method described in Examples. The degree of weight reduction can be adjusted within the above range by, for example, decreasing an organic binder, or sintering the zeolite formed body at a temperature of more than 300°C.

The content of the zeolite based on a total amount of 100% by mass of the zeolite formed body preferably may be 50% by mass or more, may be 60% by mass or more, may be 70% by mass or more, or may be 80% by mass or more. The content of the zeolite based on a total amount of 100% by mass of the zeolite formed body may be 98% by mass or less, or may be 95% by mass or less.

(Synthesis method of GIS-type zeolite)

A method for producing the GIS-type zeolite of the present embodiment can include, for example, a step of preparing a mixed gel containing a silica source including silicon, an aluminum source including aluminum, an alkali source including at least one selected from an alkali metal (M1) and an alkaline earth metal (M2), a salt compound including at least one selected from an alkali metal (M1) and an alkaline earth metal (M2), a phosphorus source including phosphorus, an organic structure-directing agent and water. Hereinafter, the mixed gel and each component included therein will be described.

[Mixed gel]

The mixed gel in the present embodiment is a mixture including a silica source, an aluminum source, a salt compound, and water as components, and including, if necessary, a phosphorus source, an alkali source, and an organic structure-directing agent.

The silica source refers to a component in the mixed gel, serving as a starting material of silicon included in a zeolite produced from the mixed gel, the aluminum source refers to a component in the mixed gel, serving as a starting material of aluminum included in a zeolite produced from the mixed gel, the salt compound refers to a component serving as starting material(s) of an alkali metal and/or an alkaline earth metal included in a zeolite produced from the mixed gel, the alkali source refers to a component for adjustment of alkalinity of the mixed gel, and the phosphorus source refers to a component in the mixed gel, serving as a starting material of phosphorus included in a zeolite produced from the mixed gel.

[Silica source]

The silica source is not particularly limited as long as it is one commonly used, and examples thereof include crystalline silica, amorphous silica, silicic acid, silicate and an organosilicate compound. More specific examples thereof include sodium silicate, potassium silicate, calcium silicate, magnesium silicate, fumed silica, precipitated silica, silica gel, colloidal silica, aluminosilicate, tetraethoxysilane (TEOS) and trimethylethoxysilane. These compounds may be used singly or in combinations of a plurality thereof. Here, aluminosilicate serves as the silica source and also serves as the aluminum source.
Among them, fumed silica, colloidal silica, or precipitated silica is preferable from the viewpoint that a zeolite high in the degree of crystallinity tends to be obtained.

[Aluminum source]

The aluminum source is not particularly limited as long as it is one commonly used, and specific examples thereof include, sodium aluminate, aluminum sulfate, aluminum nitrate, aluminum acetate, aluminum hydroxide, aluminum oxide, aluminum chloride, aluminum alkoxide, metallic aluminum and amorphous aluminosilicate gel. These compounds may be used singly or in combinations of a plurality thereof.
Among them, sodium aluminate, aluminum sulfate, aluminum nitrate, aluminum acetate, aluminum hydroxide, aluminum chloride or aluminum alkoxide is preferable from the viewpoint that a zeolite high in the degree of crystallinity tends to be obtained. From the same viewpoint, sodium aluminate or aluminum hydroxide is more preferable, and sodium aluminate is further preferable.

[Salt compound]

The salt compound is a compound including an alkali metal such as Li, Na, K, Rb or Cs or an alkaline earth metal such as Ca, Mg, Sr or Ba which promotes crystallization to a zeolite structure in the case of zeolite production. The alkali metal and the alkaline earth metal included in the salt compound added are preferably Na or K, more preferably Na, from the viewpoint of more facilitating crystal formation of the GIS-type backbone. The salt compound may be used singly or in combinations of a plurality thereof.
Specific examples of the salt compound include, but not limited to the following, sodium sulfate, sodium sulfite, sodium thiosulfate, sodium nitrite, sodium nitrate, sodium carbonate, sodium hydrogen carbonate, sodium phosphate, sodium acetate, sodium formate, sodium citrate, sodium oxalate, sodium fluoride, sodium chloride, sodium bromide, sodium iodide, thiosodium, sodium silicate, sodium metasilicate, sodium tetraborate, sodium chlorate, sodium perchlorate, sodium cyanide, sodium metastannate, sodium hexahydroxidostannate(IV), sodium hexacyanidoferrate(II), sodium permaganate, sodium chromate and sodium dichromate,

potassium sulfate, potassium sulfite, potassium thiosulfate, potassium nitrite, potassium nitrate, potassium carbonate, potassium hydrogen carbonate, potassium phosphate, potassium acetate, potassium formate, potassium citrate, potassium oxalate, potassium fluoride, potassium chloride, potassium bromide, potassium iodide, thiopotassium, potassium silicate, potassium metasilicate, potassium tetraborate, potassium chlorate, potassium perchlorate, potassium cyanide, potassium metastannate, potassium hexahydroxidostannate(IV), potassium hexacyanidoferrate(II), potassium permaganate, potassium chromate and potassium dichromate,

lithium sulfate, lithium sulfite, lithium thiosulfate, lithium nitrite, lithium nitrate, lithium carbonate, lithium hydrogen carbonate, lithium phosphate, lithium acetate, lithium formate, lithium citrate, lithium oxalate, lithium fluoride, lithium chloride, lithium bromide, lithium iodide, thiolithium, lithium silicate, lithium metasilicate, lithium tetraborate, lithium chlorate, lithium perchlorate, lithium cyanide, lithium metastannate, lithium hexahydroxidostannate(IV), lithium hexacyanidoferrate(II), lithium permaganate, lithium chromate and lithium dichromate,

rubidium sulfate, rubidium sulfite, rubidium thiosulfate, rubidium nitrite, rubidium nitrate, rubidium carbonate, rubidium hydrogen carbonate, rubidium phosphate, rubidium acetate, rubidium formate, rubidium citrate, rubidium oxalate, rubidium fluoride, rubidium chloride, rubidium bromide, rubidium iodide, thiorubidium, rubidium silicate, rubidium metasilicate, rubidium tetraborate, rubidium chlorate, rubidium perchlorate, rubidium cyanide, rubidium metastannate, rubidium hexahydroxidostannate(IV), rubidium hexacyanidoferrate(II), rubidium permaganate, rubidium chromate and rubidium dichromate,

cesium sulfate, cesium sulfite, cesium thiosulfate, cesium nitrite, cesium nitrate, cesium carbonate, cesium hydrogen carbonate, cesium phosphate, cesium acetate, cesium formate, cesium citrate, cesium oxalate, cesium fluoride, cesium chloride, cesium bromide, cesium iodide, thiocesium, cesium silicate, cesium metasilicate, cesium tetraborate, cesium chlorate, cesium perchlorate, cesium cyanide, cesium metastannate, cesium hexahydroxidostannate(IV), cesium hexacyanidoferrate(II), cesium permaganate, cesium chromate and cesium dichromate,

magnesium sulfate, magnesium sulfite, magnesium thiosulfate, magnesium nitrite, magnesium nitrate, magnesium carbonate, magnesium hydrogen carbonate, magnesium phosphate, magnesium acetate, magnesium formate, magnesium citrate, magnesium oxalate, magnesium fluoride, magnesium chloride, magnesium bromide, magnesium iodide, thiomagnesium, magnesium silicate, magnesium metasilicate, magnesium tetraborate, magnesium chlorate, magnesium perchlorate, magnesium cyanide, magnesium metastannate, magnesium hexahydroxidostannate(IV), magnesium hexacyanidoferrate(II), magnesium permaganate, magnesium chromate and magnesium dichromate,

calcium sulfate, calcium sulfite, calcium thiosulfate, calcium nitrite, calcium nitrate, calcium carbonate, calcium hydrogen carbonate, calcium phosphate, calcium acetate, calcium formate, calcium citrate, calcium oxalate, calcium fluoride, calcium chloride, calcium bromide, calcium iodide, thiocalcium, calcium silicate, calcium metasilicate, calcium tetraborate, calcium chlorate, calcium perchlorate, calcium cyanide, calcium metastannate, calcium hexahydroxidostannate(IV), calcium hexacyanidoferrate(II), calcium permaganate, calcium chromate and calcium dichromate,

strontium sulfate, strontium sulfite, strontium thiosulfate, strontium nitrite, strontium nitrate, strontium carbonate, strontium hydrogen carbonate, strontium phosphate, strontium acetate, strontium formate, strontium citrate, strontium oxalate, strontium fluoride, strontium chloride, strontium bromide, strontium iodide, thiostrontium, strontium silicate, strontium metasilicate, strontium tetraborate, strontium chlorate, strontium perchlorate, strontium cyanide, strontium metastannate, strontium hexahydroxidostannate(IV), strontium hexacyanidoferrate(II), strontium permaganate, strontium chromate and strontium dichromate,

barium sulfate, barium sulfite, barium thiosulfate, barium nitrite, barium nitrate, barium carbonate, barium hydrogen carbonate, barium phosphate, barium acetate, barium formate, barium citrate, barium oxalate, barium fluoride, barium chloride, barium bromide, barium iodide, thiobarium, barium silicate, barium metasilicate, barium tetraborate, barium chlorate, barium perchlorate, barium cyanide, barium metastannate, barium hexahydroxidostannate(IV), barium hexacyanidoferrate(II), barium permaganate, barium chromate and barium dichromate.

[Alkali source]

The alkali source is used for the purpose of adjusting the alkalinity (pH) in the mixed gel in order to promote crystallization to a zeolite structure in the case of zeolite production. The alkali used may be any compound exhibiting alkalinity, may be either an inorganic compound or an organic compound, and is preferably an inorganic compound in terms of cost, and more preferable examples thereof include alkali metal hydroxide. Examples of the alkali metal hydroxide include lithium hydroxide, sodium hydroxide, potassium hydroxide, rubidium hydroxide and cesium hydroxide, preferably include sodium hydroxide and potassium hydroxide, more preferably include sodium hydroxide. These compounds may be used singly or in combinations of a plurality thereof.

The phosphorus source is not particularly limited as long as it is one commonly used, and specific examples thereof include an aqueous phosphoric acid solution, sodium phosphate, aluminum phosphate, potassium phosphate, lithium phosphate, calcium phosphate and barium phosphate. These compounds may be used singly or in combinations of a plurality thereof.

Among them, an aqueous phosphoric acid solution, sodium phosphate or aluminum phosphate is preferable from the viewpoint that a zeolite high in the degree of crystallinity tends to be obtained. From the same viewpoint, an aqueous phosphoric acid solution or sodium phosphate is more preferable and an aqueous phosphoric acid solution is further preferable.

[Organic structure-directing agent]

The organic structure-directing agent in the case of zeolite production by hydrothermal synthesis of the mixed gel is a compound acting as promoting crystallization to a zeolite structure. In zeolite crystallization, the organic structure-directing agent can be, if necessary, used.

Any organic structure-directing agent may be adopted as the organic structure-directing agent without any limitation in terms of the type as long as it can form a desired GIS-type zeolite. The organic structure-directing agent may be used singly or in combinations of a plurality thereof.

As the organic structure-directing agent, without limitation to the following, for example, any of amines, quaternary ammonium salts, alcohols, ethers, amides, alkyl ureas, alkyl thioureas, cyanoalkanes, and alicyclic heterocyclic compounds including nitrogen as a hetero atom can be used, and alkylamines are preferably used and isopropylamine is more preferably used.

Such salts may have an anion. Representative examples of such an anion include, but not limited to the following, a halogen ion such as Cl⁻, Br⁻ and I⁻, a hydroxide ion, an acetate ion, a sulfate ion, a nitrate ion, a carbonate ion, and a hydrogen carbonate ion. Among them, a halogen ion or a hydroxide ion is preferable and a halogen ion is more preferable from the viewpoint of more facilitating crystal formation of the GIS-type backbone.

[Compositional ratio of mixed-gel]

In the present embodiment, it is most important for synthesis of a GIS-type zeolite having an appropriate structure to add the salt compound including an alkali metal and/or an alkaline earth metal. The zeolite is produced with the silica source and the aluminum source dissolved in a water solvent being dissolved and also reacted and thus crystallized, and the salt compound can be added to allow for adjustment of the binding modes of Si and Al and the abundance ratio thereof in the zeolite backbone, and allow for synthesis of GIS having an ideal crystal structure.

The ratio between the cation provided from addition of the salt compound, and the aluminum source, is particularly important. The ratio between the cation provided from the salt compound, and the aluminum source, in the mixed gel, is represented by the molar ratio of the sum of the amount E of the cation to $Al_2O_3$, namely, $E/Al_2O_3$. Here, E represents the molar amount of the cation provided from the salt compound: for example, the cationic species $Na^+$ is produced by the addition of sodium nitrate, and $2Na^+$ by the addition of sodium carbonate, and the molar amount of the sum of the cationic species produced by addition of the salt compound is represented by E. The $E/Al_2O_3$ can allow for the change in aggregation state of Al in the mixed gel, leads to control of randomness of Al in zeolite crystal formation, and can allow for synthesis of a GIS-type zeolite having an ideal crystal structure. It is necessary from the above viewpoints to optimally control $E/Al_2O_3$, and $E/Al_2O_3$ is preferably 0.1 or more and 100.0 or less, more preferably, 0.5 or more and 80.0 or less, further preferably 0.8 or more and 50.0 or less.

The ratio ($H_2O/OH^-$) of water and OH- in the mixed gel is important for synthesis of a GIS-type zeolite having an appropriate SAR. "OH⁻" is OH⁻ derived from an inorganic hydroxide such as NaOH or $Ca(OH)_2$ for use as the alkali source, or an organic hydroxide such as tetraethylammonium hydroxide, and does not encompass one represented as an oxide such as sodium aluminate or sodium silicate, and OH- discharged in dissolution of the hydrate in water. The zeolite is produced by not only a reaction of crystallization of the silica source, the aluminum source and the alkali source dissolved in a water solvent, but also elution of some thereof in an alkaline solvent, and then the occurrence of equilibrium of crystallization and re-dissolution. Addition of OH-derived from an inorganic hydroxide such as NaOH or $Ca(OH)_2$ and/or an organic hydroxide such as tetraethylammonium hydroxide, into the mixed gel, means that the equilibrium of crystallization and re-dissolution is shifted to re-dissolution. In such re-dissolution, dissolution progresses from an amorphous portion or a portion low in crystallinity. Accordingly, a proper increase of OH⁻ can allow for repeating of re-dissolution and re-crystallization of an incomplete crystal portion, resulting in an increase in formation of an ideal crystal structure. On the other hand, when the amount of OH- increases too much, excessive dissolution may progress, resulting in generation of no crystal and/or generation of an ANA-type zeolite having other crystal phase, for example, a more stable structure. In addition, alumina dissolved is higher in reactivity than silica, and alumina is more easily incorporated into a crystal. Here, proper adjustment of OH⁻ can allow for adjustment of the rates of crystallization and re-dissolution, and optimization of the ratio between silica and alumina incorporated into a crystal, resulting in optimization of the SAR of the GIS-type zeolite synthesized.

A high ratio of water ($H_2O/Al_2O_3$) tends to allow components in the mixed gel to be easily dispersed more uniformly, but a too high ratio thereof tends to cause the rate of crystallization to be extremely reduced. Accordingly, such tendencies have any effect on the equilibrium of crystallization and re-dissolution, and thus not only control of $H_2O/OH^-$, but also control of $H_2O/Al_2O_3$ is needed to be optimized in order to synthesize a GIS-type zeolite having an optimal SAR and having an optimal crystal structure.

From the above viewpoint, $H_2O/Al_2O_3$ and $H_2O/OH^-$ are respectively preferably $100 \leq H_2O/Al_2O_3 \leq 780$ and $50 \leq H_2O/OH^- \leq 1000$, more preferably $120 \leq H_2O/Al_2O_3 \leq 778$ and $60 \leq H_2O/OH^- \leq 800$, further preferably $150 \leq H_2O/Al_2O_3 \leq 775$ and $70 \leq H_2O/OH^- \leq 700$.

The ratio between the silica source and the aluminum source in the mixed gel is represented as the molar ratio of the oxides of the corresponding elements, namely, $SiO_2/Al_2O_3$. (Herein, the ratio in the zeolite synthesized and the silica/alumina ratio in the mixed gel are not matched. The silica/alumina ratio in the zeolite synthesized is determined depending on other compositional and synthesis conditions.)

The $SiO_2/Al_2O_3$ in the mixed gel is not particularly limited as long as zeolite can be formed, and is preferably 3.0 or more and 70.0 or less, more preferably 3.5 or more and 65.0 or less, further preferably 4.0 or more and 60.0 or less because formation of a zeolite having a backbone different from the GIS-type backbone can be suppressed.

The ratio between the aluminum source and the alkali metal and the alkaline earth metal in the mixed gel is represented by the molar ratio of the sum of $M1_2O$ and $M2O$ to $Al_2O_3$, namely, $(M1_2O+M2O)/Al_2O_3$ (wherein M1 represents the alkali metal and M2 represents the alkaline earth metal, and these are each calculated in terms of oxide). Herein, the ratio $(M1_2O+M2O)/Al_2O_3$ is preferably 1.5 or more, more preferably 1.6 or more, further preferably 1.65 from the viewpoint of more facilitating crystal formation of the GIS-type backbone. The $(M1_2O+M2O)/Al_2O_3$ is preferably 15.0 or less, more preferably 12.0 or less, further preferably 10.0 or less from the viewpoint that formation of a zeolite having a backbone different from the GIS-type backbone can be suppressed.

The ratio between the phosphorus source and the aluminum source in the mixed gel is represented as the molar ratio of the oxides of the corresponding elements, namely, $P_2O_5/Al_2O_3$. The ratio $P_2O_5/Al_2O_3$ is not particularly limited as long as zeolite can be formed, and the ratio is preferably less than 1.0, more preferably 0.6 or less, further preferably 0.4 or less, particularly preferably 0 because formation of a zeolite having a backbone different from the GIS-type backbone tends to be able to be suppressed.

When the organic structure-directing agent is included in the mixed gel, the ratio between the aluminum source and the organic structure-directing agent is represented by the molar ratio of the organic structure-directing agent to $Al_2O_3$, namely, $R/Al_2O_3$ (wherein R represents the organic structure-directing agent). The ratio is preferably less than 7.0, more preferably 6.0 or less, further preferably 5.0 or less from the viewpoint of more facilitating crystal formation of the GIS-type backbone and/or decreasing the synthesis period to allow economic efficiency in zeolite production to be excellent. When the organic structure-directing agent is used, the zeolite organic structure-directing agent remains in a zeolite pore and carbon dioxide cannot enter into the pore, resulting in a decrease in amount of adsorption. While heating to at least 400°C or more is required in order to remove the organic structure-directing agent, a crystal of the GIS-type zeolite is collapsed at 350°C or more and thus is amorphous, and thus the amount of the organic structure-directing agent is preferably small. From this viewpoint, $R/Al_2O_3$ is preferably 4.0 or less, more preferably 3.5 or less, further preferably 3.0 or less.

As described above, the method for producing the GIS-type zeolite of the present embodiment includes a step of preparing a mixed gel containing a silica source including silicon, an aluminum source including aluminum, an alkali source including at least one selected from an alkali metal (M1) and an alkaline earth metal (M2), a salt compound including at least one selected from an alkali metal (M1) and an alkaline earth metal (M2), a phosphorus source, and water, wherein, when the molar ratios of components in the mixed gel are calculated in terms of oxides of corresponding elements with respect to the silicon, the aluminum, the alkali metal (M1) and the alkaline earth metal (M2), and the phosphorus source, the molar ratios $\alpha$, $\beta$, $\gamma$, $\delta$, $\varepsilon$ and $\zeta$ represented by the following expressions (1), (2), (3), (4), (5) and (6) preferably satisfy $0.1 \leq \alpha \leq 100.0$, $3.0 \leq \beta \leq 70.0$, $1.5 \leq \gamma \leq 15.0$, $0 \leq \delta < 1.0$, $100 \leq \varepsilon \leq 780$ and $50 \leq \zeta \leq 1000$, more preferably satisfy $0.5 \leq \alpha \leq 80.0$, $3.5 \leq \beta \leq 65.0$, $1.6 \leq \gamma \leq 12.0$, $0 \leq \delta \leq 0.6$, $120 \leq \varepsilon \leq 778$ and $60 \leq \zeta \leq 800$, further preferably satisfy $0.8 \leq \alpha \leq 50$, $4.0 \leq \beta \leq 60.0$, $1.65 \leq \gamma \leq 10.0$, $0 \leq \delta \leq 0.4$, $150 \leq \varepsilon \leq 775$ and $70 \leq \zeta \leq 700$. The GIS-type zeolite according to the present embodiment is particularly preferably one obtained by the above method for producing the GIS-type zeolite of the present embodiment.

$$\alpha = E/Al_2O_3 \qquad (1)$$

$$\beta = SiO_2/Al_2O_3 \qquad (2)$$

$$\gamma = (M1_2O + M2O)/Al_2O_3 \qquad (3)$$

$$\delta = P_2O_5/Al_2O_3 \qquad (4)$$

$$\varepsilon = H_2O/Al_2O_3 \qquad (5)$$

$$\xi = H_2O/OH^- \qquad (6)$$

Furthermore, in the method for producing a GIS-type zeolite according to the present embodiment, preferably, the molar ratios $\alpha$, $\beta$, $\gamma$, $\delta$, $\varepsilon$ and $\xi$ satisfy the above ranges, and when the mixed gel further includes an organic structure-directing agent R, the molar ratio $\eta$ represented by the following expression (7) preferably satisfies $\eta \leq 4$.

$$\eta = R/Al_2O_3 \qquad (7)$$

Although a seed crystal is not necessarily needed to be present in the mixed gel, a GIS-type zeolite produced in advance can also be added as a seed crystal to the mixed gel, to provide the GIS-type zeolite according to the present embodiment.

[Step of preparing mixed gel]

The step of preparing a mixed gel is not particularly limited, and may include, for example, a mixing step of mixing a silica source, an aluminum source, a salt compound, water, and, if necessary, a phosphorus source, an alkali source an organic structure-directing agent at one time or at multiple stages, and an aging step of the mixture obtained in the mixing step.

The mixing step can mix components including the silica source, the aluminum source, the salt compound, water, and, if necessary, the phosphorus source, the alkali source the organic structure-directing agent at one time or at multiple stages.

The order in mixing at multiple stages is not limited, and may be appropriately selected depending on conditions used. The mixing at multiple stages may be performed either with stirring or without stirring. In stirring, a stirring method commonly used is adopted without any particular limitation, and specific examples include methods using blade stirring, vibration stirring, oscillation stirring, and centrifugation stirring, and the like.

The rotational speed in stirring is not particularly limited as long as it is a stirring speed commonly used, and is, for example, 1 rpm or more and less than 2000 rpm.

The temperature in the mixing step is not particularly limited as long as it is a temperature commonly used, and is, for example, -20°C or more and less than 80°C.

The period for the mixing step is not particularly limited and can be appropriately selected depending on the temperature in the mixing step, and is, for example, more than 0 minutes and 1000 hours or less.

The aging step may be performed with either standing or stirring. In stirring in the aging step, a stirring method commonly used is adopted without any particular limitation, and specific examples include methods using blade stirring, vibration stirring, oscillation stirring, and centrifugation stirring.

The rotational speed in stirring is not particularly limited as long as it is a stirring speed commonly used, and is, for example, 1 rpm or more and less than 2000 rpm.

The temperature in the aging step is not particularly limited as long as it is a temperature commonly used, and is, for example, -20°C or more and less than 80°C.

The period for the aging step is not particularly limited, can be appropriately selected depending on the temperature in the aging step, and is, for example, more than 0 minutes and 1000 hours or less.

It is considered in zeolite production that dissolution of starting materials and production and re-dissolution of a zeolite precursor occur in the mixing step and the aging step of starting materials. In order to form a large periodic structure including an 8-membered ring without the occurrence of defects and the like, it is preferable not to allow formation of a zeolite precursor to excessively progress. When formation of a zeolite precursor excessively progresses, it is preferable not to excessively age such a precursor because generation of an ANA-type zeolite having a more stable structure tends to be increased. On the other hand, starting materials are preferably sufficiently mixed to provide a uniform starting material gel. The total period for the mixing step and the aging step combined may be appropriately adjusted based on the composition of starting materials, and the like in order to obtain a zeolite having a proper structure, and is not particularly limited. The period is typically preferably 1 minute or more and less than 24 hours, more preferably 3 minutes or more and less than 23 hours, further preferably 10 minutes or more and 18 hours or less, still further preferably 12 minutes or more and 15 hours or less, furthermore preferably 20 minutes or more and 6 hours or less.

[Hydrothermal synthesis step]

The method for producing a GIS-type zeolite according to the present embodiment preferably further includes a hydrothermal synthesis step where the hydrothermal synthesis temperature is 80°C to 200°C, and the hydrothermal synthesis temperature is more preferably 100°C to 180°C. That is, the mixed gel obtained in the preparation step is preferably subjected to hydrothermal synthesis with being kept at a predetermined temperature for a predetermined period with stirring or standing.

The temperature in the hydrothermal synthesis is not particularly limited as long as it is a temperature commonly used, and it is preferably 80°C or more from the viewpoint of decreasing the synthesis period to allow economic efficiency in zeolite production to be excellent. The temperature is more preferably 90°C or more, further preferably 100°C or more from the viewpoint that formation of a zeolite having a backbone different from the GIS-type backbone can be suppressed. The temperature is more preferably 200°C or less, further preferably 180°C or less, further preferably 170°C or less from the viewpoint that formation of a zeolite having a backbone different from the GIS-type backbone can be suppressed. The temperature in the hydrothermal synthesis may be constant or may be changed stepwisely.

The period for the hydrothermal synthesis is not particularly limited as long as it is a period commonly used, and can be appropriately selected depending on the temperature in the hydrothermal synthesis. The period for the hydrothermal synthesis is preferably 3 hours or more, more preferably 10 hours or more from the viewpoint that the GIS backbone is formed. The period is further preferably 24 hours or more from the viewpoint that a GIS-type zeolite high in crystallinity is obtained. The period for the hydrothermal synthesis is preferably 30 days or less, more preferably 20 days or less, further preferably 10 days or less from the viewpoint of allowing the economic efficiency in zeolite production to be excellent.

The container to which the mixed gel is loaded in the hydrothermal synthesis step is not particularly limited as long as it is a container commonly used, and when the pressure in the container is increased at a predetermined temperature or is gas pressure not inhibiting crystallization, the mixed gel is preferably loaded in a pressure-resistant container and subjected to the hydrothermal synthesis. The pressure-resistant container is not particularly limited, and a pressure-resistant container having any of various shapes such as spherical, longitudinally elongated, and horizontally elongated shapes can be used.

When the mixed gel in the pressure-resistant container is stirred, the pressure-resistant container is rotated vertically and/or laterally, preferably rotated vertically. When the pressure-resistant container is rotated vertically, the rotational speed is not particularly limited as long as it is within a range commonly used, and it is preferably 1 to 50 rpm, more preferably 10 to 40 rpm.

In the hydrothermal synthesis step, examples of preferable stirring of the mixed gel include a method including using a pressure-resistant container having a longitudinally elongated shape and vertically rotating it.

[Separation/drying step]

After the hydrothermal synthesis step, the solid as the product and the liquid including water are separated, and the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried. The temperature at which the resultant from separation is dried is not particularly limited as long as it is a common drying temperature, and it is usually from room temperature to 150°C or less. The atmosphere during drying is not particularly limited as long as it is an atmosphere commonly used, and an air atmosphere, or an atmosphere to which an inert gas such as nitrogen or argon, or oxygen is added is usually used.

[Calcining step]

A GIS-type zeolite, if necessary, calcined can be used. The calcining temperature is not particularly limited as long as it is a temperature commonly used, and it is preferably 300°C or more, more preferably 350°C or more from the viewpoint that, when the organic structure-directing agent is desired to be removed, the proportion thereof remaining can be decreased. The temperature is further preferably 360°C or more from the viewpoint that the calcining period is decreased to allow the economic efficiency in zeolite production to be excellent. The temperature is preferably less than 450°C, more preferably 420°C or less, further preferably 400°C or less because crystallinity of zeolite tends to be retained.

The calcining period is not particularly limited as long as it is a period where the organic structure-directing agent is sufficiently removed, and it can be appropriately selected depending on the calcining temperature and is preferably 0.5 hours or more, more preferably 1 hour or more, further preferably 3 hours or more because the proportion of the remaining organic structure-directing agent tends to be able to be decreased. The calcining period is preferably 10 days or less, more preferably 7 days or less, further preferably 5 days or less because crystallinity of zeolite tends to be retained.

The calcining atmosphere is not particularly limited as long as it is an atmosphere commonly used, and an air atmosphere, or an atmosphere to which an inert gas such as nitrogen or argon, or oxygen is added is usually used.

[Cation exchange]

The GIS-type zeolite can be, if necessary, subjected to cation exchange to a desired cation type. In such cation exchange, without limitation to the following, for example, carbonate such as sodium carbonate, potassium carbonate, lithium carbonate, rubidium carbonate, cesium carbonate, magnesium carbonate, calcium carbonate, strontium carbonate, barium carbonate or ammonium carbonate, or nitrate such as sodium nitrate, potassium nitrate, lithium nitrate, rubidium nitrate, cesium nitrate, magnesium nitrate, calcium nitrate, strontium nitrate, barium nitrate or ammonium nitrate, or a salt where a carbonate ion or a nitrate ion included in the carbonate or the nitrate is changed to a halide ion, a sulfate ion, a carbonate ion, a hydrogen carbonate ion, an acetate ion, a phosphate ion or a hydrogen phosphate ion, or an acid such as nitric acid or hydrochloric acid can be used.

The cation exchange temperature is not particularly limited as long as it is a common cation exchange temperature, and it is usually from room temperature to 100°C or less.

In separation of zeolite after such cation exchange, the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried.

The temperature at which the resultant from separation is dried is not particularly limited as long as it is a common drying temperature, and it is usually from room temperature to 150°C or less.

The atmosphere during drying is not particularly limited as long as it is an atmosphere commonly used, and an air atmosphere, or an atmosphere to which an inert gas such as nitrogen or argon, or oxygen is added is usually used.

Furthermore, an ammonium-type zeolite can also be calcined and thus converted to a proton-type zeolite.

(Carrier)

The zeolite formed body according to the present embodiment preferably includes a carrier. Examples of the carrier include an inorganic binder and an organic binder.

Examples of the inorganic binder include inorganic oxides such as alumina, silica, magnesia, zirconia and titania, clay minerals such as bentonite and kaolin, calcium silicate, and calcium aluminate. Examples of the alumina include $\alpha$-alumina, $\gamma$-alumina, boehmite, pseudo boehmite, bayerite, gibbsite, and diaspore. Examples of the silica include colloidal silica, water glass, fumed silica, silica sol, wet-process silica, dry-process silica, and natural silica. These inorganic binders may be used singly or in combinations of a plurality thereof. Among these inorganic binders, alumina, silica, magnesia, zirconia, and titania are preferable, and silica and alumina are more preferable from the viewpoint of an enhancement in strength of the zeolite formed body.

The content of the inorganic binder based on the total amount (100% by mass) of the zeolite formed body is preferably 1 to 99% by mass, more preferably 5 to 90% by mass, further preferably 8 to 80% by mass.

Examples of the organic binder include cellulose, methyl cellulose, carboxymethyl cellulose, hydroxyethyl cellulose, latex, polyvinyl alcohol, vinyl acetate, polyvinyl acetal, vinyl chloride, acrylic, polyamide, urea, melamine, a phenol resin, polyester, polyurethane, polyamide, polybenzimidazole, chloroprene rubber, nitrile rubber, styrene-butadiene rubber, polysulfide, butyl rubber, silicone rubber, acrylic rubber, and urethane rubber. These organic binders may be used singly or in combinations of a plurality thereof. Among these organic binders, cellulose, methyl cellulose, carboxymethyl cellulose, hydroxyethyl cellulose, and polyvinyl alcohol are preferable, and cellulose, methyl cellulose, and polyvinyl alcohol are more preferable, from the viewpoint of surface binding with the GIS-type zeolite.

The content of the organic binder based on the total amount (100% by mass) of the zeolite formed body is preferably 1 to 99% by mass, more preferably 5 to 90% by mass, further preferably 8 to 80% by mass.

The carrier preferably includes the inorganic binder and the organic binder from the viewpoint of providing a desired density. In other words, the carrier preferably includes one or more of the above inorganic binders and one or more of the organic binders.

The total content of the carrier based on the total amount (100% by mass) of the zeolite formed body is preferably 1 to 99% by mass, more preferably 5 to 90% by mass, further preferably 8 to 80% by mass. When the content of the carrier is higher, the formed body tends to be higher in strength, but the content of the zeolite itself tends to be lower. Therefore, the content of the carrier may be adjusted in consideration of the strength and performance demanded depending on the intended use.

The shape of the zeolite formed body is not particularly limited, and examples thereof include spherical, cylindrical, elliptic, bale-type, trefoil-type, ring, and powdery shapes. Among them, spherical and cylindrical shapes are further preferable.

The spherical shape means that the aspect ratio of the formed body is within a range of 1 to 1.1. The aspect ratio of the formed body is the ratio between a longer diameter and a shorter diameter, in which, once the formed body is stably left to still stand on a horizontal surface, a projection image is taken in the vertical direction of the formed body and is sandwiched between two mutual parallel straight lines each contacting with the projection image, and the interval corresponding to the largest interval between such parallel lines is defined as the longer diameter and the interval corresponding to the smallest interval between such parallel lines is defined as the shorter diameter. The circularity means the value obtained by dividing the difference between the maximum value and the minimum value among the diameters at any three positions measured with a micrometer having a minimum read value of 0.01 mm or less, by 2.

The cross section obtained by cutting the formed body at a flat plane passing through any two points on the periphery of the formed body is preferably one circle having a circularity of 0.5 or less, more preferably one circle having a circularity of 0.4 or less, further preferably one circle having a circularity of 0.3 or less.

The size of the formed body is not particularly limited, and is changed depending on the state of use of the formed body. For example, in the case of use of a process in which the formed body is used in any other state than a flow state, such as a fixed bed or a mobile bed, a spherical form having a diameter of 3 mm or more and 10 mm or less, or a cylindrical form having a length of 3 mm or more and 30 mm or less and a diameter of 1 mm or more and 30 mm or less is preferable.

The diameter of such a sphere is more preferably 5 mm or more and 8 mm or less. The diameter of such a sphere is the average value of the longer diameter and the shorter diameter used for calculation of the aspect ratio of the formed body, and can be adjusted within the above range by, for example, an operation such as sphere division.

The length of such a cylinder is more preferably 3 mm or more and 10 mm or less, further preferably 3 mm or more and 8 mm or less. The diameter of such a cylinder is more preferably 2 mm or more and 4 mm or less.

The length and the diameter can be determined by subjecting three samples to measurement of the length and the diameter of a pellet by a caliper method with a caliper having a minimum read value of 0.1 mm or less, to provide the respective average values as the length and the diameter, and can be adjusted within the above range by, for example, an operation such as classification.

In the case of use of a process in which the formed body is allowed to flow and then used, such as a fluid bed, a particle having a particle size of 20 $\mu$m or more and 300 $\mu$m or less is preferable. The particle size is more preferably 20 $\mu$m or more and 200 $\mu$m or less, further preferably 30 $\mu$m or more and 100 $\mu$m or less. The particle size can be measured as a median size ($D_{50}$) with a laser diffraction/scattering type particle size analyzer (MT3000 manufactured by Microtrac), according to the attached manual.

The compressive strength of the zeolite formed body according to the present embodiment is preferably 1.0 MPa or more, more preferably 2.2 MPa or more, further preferably 3.4 MPa or more. In particular, in a case where the zeolite formed body according to the present embodiment is powdery, the above range is preferably satisfied.

The compressive strength can be determined as the average value of the values obtained in measurement twenty times with a micro compression testing machine (MCT-W500 manufactured by Shimadzu Corporation, compressive strength measurement), and can be adjusted within the above range by, for example, the calcining temperature and/or the calcining time.

The fracture strength of the zeolite formed body according to the present embodiment is preferably 5 N or more, more preferably 10 N or more, further preferably 20 N or more. In particular, in a case where the zeolite formed body according to the present embodiment is a pellet, the above range is preferably satisfied.

The fracture strength can be determined as the average value of the respective values obtained in measurement twenty times with a digital hardness meter (KHT-40N manufactured by Fujiwara Scientific Co., Ltd., indenter 3 mm, fracture strength measurement), and can be adjusted within the above range by, for example, the calcining temperature and/or the calcining time.

[Method for producing zeolite formed body]

A method for producing a zeolite formed body according to the present embodiment may include, without particular limitations, a starting material mixing step (X) of mixing the zeolite in the present embodiment, and any other component (for example, carrier), to perform preparation, a molding treatment step (Y) of subjecting the prepared starting material to molding treatment to thereby obtain a precursor, and a calcining step (Z) of calcining the precursor, to provide a zeolite formed body.

In a case where a desired zeolite formed body is obtained in the method for producing a zeolite formed body, molding may be made by other method, for example, extrusion treatment, injection treatment, injection/casting treatment, tumbling granulation treatment, compression molding treatment, spray drying treatment, or a method in which two or more of these methods are combined.

The apparent density $d_a$, the true density dt, apparent density d/true density dt, the bulk density $d_b$, and the bulk density $d_b$/true density dt are each adjusted in the zeolite formed body according to the present embodiment by, for example, selection of the carrier and/or selection of a granulating method. Specifically, examples of the method for allowing the apparent density $d_a$ to be within a predetermined range include, but not particularly limited, a method including selecting a carrier high in affinity with zeolite. Such a carrier high in affinity is selected to allow a mixture of the zeolite and such a carrier to exhibit excellent shape retention, resulting in an enhancement in apparent density $d_a$ of the formed body.

Examples of the method for allowing the true density dt to be within a predetermined range include, but not particularly limited, a method including adjusting the type and the amount of addition of the carrier.

Examples of the method for allowing the apparent density $d_a$/true density dt to be within a predetermined range include, but not particularly limited, a method including selecting a carrier which can be granulated into any shape with a smaller amount of moisture when mixed with the zeolite in the present embodiment and a method including selecting a granulating method allowing for granulation with a smaller amount of moisture. A smaller amount of moisture during granulation leads to a smaller distance between particles of the zeolite and/or the carrier and a decrease of voids in the formed body, and thus leads to an enhancement in apparent density $d_a$/true density dt.

Examples of the method for allowing the bulk density $d_b$ to be within a predetermined range include, but not particularly limited, a method including adjusting the size of the formed body. The size of the formed body is adjusted so as to be sufficiently small relative to the size of a container to be packed, thereby allowing for tight packing of the formed body in the container, and resulting in an enhancement in bulk density $d_b$.

Examples of the method for allowing the bulk density $d_b$/true density dt to be within a predetermined range include, but not particularly limited, a method including granulation to a sufficiently small formed body relative to the size of a container to be packed, with a smaller amount of moisture. Such granulation with a smaller amount of moisture can be made, thereby leading to smaller voids in the formed body, and furthermore such a sufficiently small formed body relative to the size of a container to be packed can be obtained and thus tightly packed in the container, resulting in an enhancement in bulk density $d_b$/true density dt.

[Starting material mixing step (X)]

The starting material used in the starting material mixing step (X) may be used in a state adapted to a production method, such as a powder, solvent dispersion, sol, or liquid state. In a case where, for example, the inorganic binder is used as such a starting material used, the inorganic binder is used in a state adapted to a production method, such as a powder, solvent dispersion, sol, or liquid state, preferably used in a powder or sol state from the viewpoint of ease of handling. Such an inorganic binder may be used singly or in combinations of a plurality thereof. The temperature at which the starting material is mixed is not particularly limited, and is, for example, preferably 10°C to 80°C, more preferably 15°C to 60°C. For example, when the state after starting material mixing is a slurry state as in spray drying treatment, water in the starting material tends to be able to be inhibited from being evaporated at a temperature of the starting material of 80°C or less, and such slurry tends to be able to be inhibited from being frozen at a temperature of the starting material of 10°C or more. For example, when a clay state in a funicular to capillary state is achieved after starting material mixing as in extrusion treatment, moisture tends to be inhibited from being evaporated from the clay to allow the amount of moisture in the clay to be kept constant at a temperature of the starting material of 80°C or less, and moisture in the clay tends to be able to be inhibited from being frozen at a temperature of the starting material of 10°C or more. The mixing tool adopted in preparation of the starting material can be any tool. For example, when the state after starting material mixing is a slurry state as in spray drying treatment, a stirring blade is preferably listed. Specific examples of the blade used in stirring include propeller-shaped, paddle-shaped, flat paddle-shaped, turbine-shaped, and cone-shaped blades. A baffle plate or the like may be disposed in a tank in order to perform efficient stirring. The optimal condition of the number of stirring machines may be selected depending on the size of a catalyst starting material liquid tank, the shape of the stirring blade, and the like. In the present embodiment, the total mixing time of the starting material is preferably 1 minute to 24 hours, more preferably 10 minutes to 5 hours, further preferably 15 minutes to 3 hours. In a case where the mixing time of the mixed liquid is 1 minute or more, the starting material tends to be easily uniform in composition, and in a case where the mixing time is 24 hours or less, the influence of moisture evaporation in the starting material tends to be smaller. For example, in a case where a clay state in a funicular to capillary state is achieved after starting material mixing as in extrusion treatment, a mixing machine, a kneading machine, or the like is preferably selected depending on the state of the starting material. In the present embodiment, the total mixing or kneading time of the starting material is preferably 1 minute to 24 hours, more preferably 2 minutes to 5 hours, further preferably 3 minutes to 3 hours. In a case where the mixing time of the mixed liquid is 1 minute or more, the starting material tends to be easily uniform in composition, and in a case where the mixing time is 24 hours or less, the influence of moisture evaporation in the starting material tends to be smaller. In a case where an organic binder to be easily gelled by heat, such as methyl cellulose, is compounded, the internal temperature of a mixing machine, a kneading machine, or the like can be kept at a value less than the thermal gelling temperature of the organic binder, thereby allowing for suppression of gelling of the organic binder and resulting in a tendency to provide a starting material having a uniform composition.

Furthermore, the starting material, which is in a clay state, can also be left to still stand and aged. Such aging not only tends to allow moisture to be easily spread between starting material zeolites, easily resulting in an enhancement in moldability, but also tends to lead to exchange with a gas present between zeolites, such as air, thereby providing a more densified formed body.

[Molding treatment step (Y)]

Examples of the molding treatment in the molding treatment step (Y) include extrusion treatment, compression molding treatment, and spray drying treatment.

The extrusion treatment is not particularly limited, and the temperature in extrusion is, for example, preferably 10°C to 80°C, more preferably 15°C to 75°C depending on properties of a starting material used (also referred to as "starting material clay" in the extrusion treatment.). The amount of moisture in the starting material clay is preferably 35% by mass to 50% by mass, more preferably 38% by mass to 45% by mass. In a case where the amount of moisture is 50% by mass or less, the starting material clay can be prevented from being excessively enhanced in flexibility, resulting in a tendency to enhance moldability, and in a case where the amount of moisture is 35% by mass or more, the starting material clay can be prevented from being properly reduced in flexibility, resulting in a tendency to enhance moldability.

In a case where the extrusion treatment is used as the molding treatment step (Y), the extruder is not particularly limited, and examples thereof include screw-type, roll-type, blade-type, self-molding-type, ram-type, and disc pelletizer-type extruders. Among them, in particular, a roll-type, screw-type, or disc pelletizer-type extruder is preferably used to carry out the extrusion treatment.

In a case where the compression molding treatment is used as the molding treatment step (Y), the compression molding machine is not particularly limited, and examples thereof include uniaxial press molding and hot press molding machines.

In the spray drying treatment, for example, slurry atomization can be performed by any method with a rotating disc system, a two-fluid nozzle system, a highpressure nozzle system, and the like, usually industrially carried out, and in particular, is preferably performed with a rotating disc system. The drying heat source used in drying of droplets sprayed is preferably air heated by steam, an electric heater, or the like. The temperature at an inlet of a drying machine can be about 100°C to 400°C and is preferably 150°C to 300°C. The temperature at an outlet of a drying machine can be about 40°C to 150°C and is preferably 50°C to 130°C.

[Calcining step (Z)]

The calcining temperature in the calcining step (Z) is not particularly limited as long as it is a temperature commonly used, and the calcining temperature is preferably less than 550°C, more preferably 530°C or less, further preferably 500°C or less because the zeolite tends to be able to not only retain crystallinity, but also ensure strength. The calcining temperature is preferably 110°C or more, more preferably 120°C or more.

The calcining time in the calcining step (Z) is not particularly limited and can be appropriately selected depending on the calcining temperature as long as the carrier is sufficiently dried and sintered, and the time is preferably 20 days or less, more preferably 10 days or less, further preferably 7 days or less because the zeolite tends to be able to not only retain crystallinity, but also ensure strength.

The calcining atmosphere in the calcining step (Y) is not particularly limited as long as it is an atmosphere commonly used, and air atmosphere, or an atmosphere to which an inert gas such as nitrogen or argon, or oxygen is added is usually used.

The calcining in the calcining step (Z) can be performed with a calcining furnace such as a rotary furnace, a tunnel furnace, or a muffle furnace.

The zeolite formed body according to the present embodiment is not particularly limited in the application thereof, and can be used for, for example, separating agents or separation membranes for various gases and liquids, electrolyte membranes for fuel cells and the like, fillers of various resin formed bodies, membrane reactors, catalysts for hydrocracking, alkylation and the like, catalyst carriers for carrying metals, metal oxides, and the like, adsorbents, desiccants, detergent aids, ion exchangers, waste water treatment agents, fertilizers, food additives, cosmetic additives, and the like.

Among the above, the zeolite formed body according to the present embodiment can be suitably used as an adsorbent.

[Adsorption system]

An adsorption system according to the present embodiment includes the zeolite formed body according to the present embodiment. The adsorption system according to the present embodiment is thus configured, and thus can sufficiently adsorb carbon dioxide and is also high in selectivity of adsorption of carbon dioxide relative to the methane adsorption capacity. Therefore, the adsorbent can be particularly preferably used for the purpose of, for example, selective removal of carbon dioxide from natural gas.

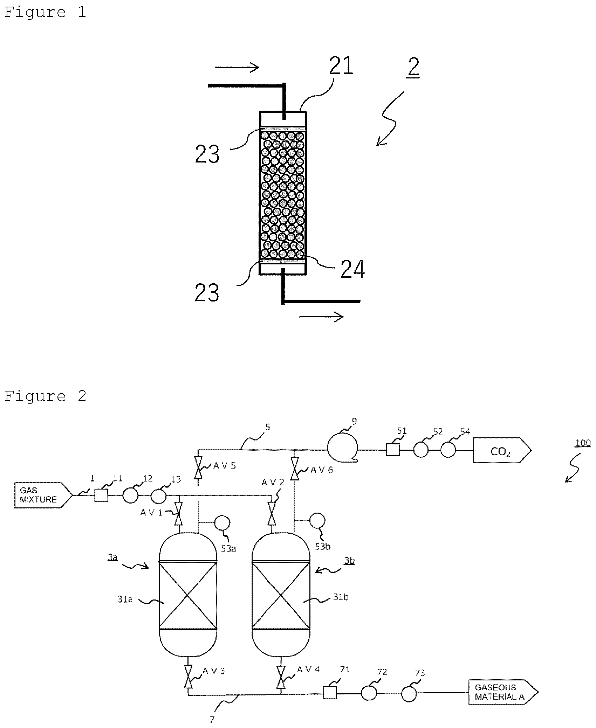

The adsorption system according to the present embodiment includes the zeolite formed body including zeolite according to the present embodiment, and may correspond to a configuration example illustrated in Figure 1. An adsorption system 2 according to the present embodiment, illustrated in Figure 1, includes, in a container 21, a filter 23 disposed at each of two positions closer to the inlet and the outlet and a plurality of zeolite formed bodies 24 packed between such two filters 23. For example, a filter formed from quartz can be used for the filter 23. For example, when the adsorption system 2 is used for separation of carbon dioxide from natural gas, the natural gas can be introduced through an upper line and impurities can be removed therefrom by the filter 23, thereafter carbon dioxide is selectively adsorbed and removed by the zeolite formed body 24, and a methane-rich gas can be taken out through a lower line. Herein, an object to be subjected to the adsorption system is not limited to natural gas, and the inner structure of the adsorption system is also not limited to the example illustrated in Figure 1. The adsorption system 2 according to the present embodiment may be a purified gas production system 100 described below.

[Method for producing purified gas]

The method for producing a purified gas according to the present embodiment is to separate one or more selected from the group consisting of $CO_2$, $H_2O$, He, Ne, $Cl_2$, $NH_3$, and HCl from mixture including two or more gases selected from the group consisting of $N_2$, $N_2$, $O_2$, CO, and hydrocarbon, by use of an adsorption system including the zeolite according to the present embodiment. In the present embodiment, it is preferable to separate one or more selected from the group consisting of $CO_2$ and $H_2O$ from one or more gases selected from the group consisting of $N_2$, $O_2$, CO, and hydrocarbon. Herein, the hydrocarbon is not particularly limited, and examples thereof include methane, ethane, ethylene, propane, propylene, 1-butene, 2-butene, 2-methylpropene, dimethyl ether, and acetylene.

The GIS-type zeolite according to the present embodiment is particularly high in volume of adsorption of $CO_2$, and physical adsorption through no chemical bond is observed. A separation method using the zeolite according to the present embodiment is not particularly limited, and is preferably a method low in energy in reproduction of an adsorbent and excellent in economic performance. A specific example of such a method here used is, but not particularly limited, preferably any of a pressure swing-type adsorption-separation method, a temperature swing-type adsorption-separation method, or a pressure/temperature swing-type adsorption-separation method. A pressure swing-type adsorption-separation method (PSA: Pressure Swing Adsorption) is a method where gas separation is performed by decreasing the pressure in gas desorption so that the pressure is lower than that in gas adsorption and utilizing the difference between the amount of adsorption at a high pressure and the amount of adsorption at a low pressure. A temperature swing-type adsorption-separation method (TSA: Thermal Swing Adsorption) is a method where gas separation is performed by increasing the temperature in gas desorption so that the temperature is higher than that in gas adsorption and utilizing the difference between the amount of adsorption at a low temperature and the amount of adsorption at a high temperature. A combined method of such methods is a pressure/temperature swing-type adsorption desorption method (PTSA: Pressure and Therml Swing Adsorption). Such methods can be performed in various known conditions.

A method for producing a purified gas according to the present embodiment is a method for producing a purified gas by separation of carbon dioxide and a second component gas different from carbon dioxide, from a gas mixture including the carbon dioxide and the second component gas, by use of an adsorption tower packed with an adsorbent including zeolite, the method including

an adsorption step of introducing the gas mixture into the adsorption tower and allowing the adsorbent to adsorb carbon dioxide, to take out the second component gas, and
a desorption step of evacuating carbon dioxide from the adsorption tower, to take out the carbon dioxide from the adsorbent.

In the method for producing a purified gas according to the present embodiment, the above zeolite formed body is used as the adsorbent. A zeolite formed body excellent in embrittlement resistance to adsorption of carbon dioxide can be used to facilitate control of maintenance of an system, for example, decrease the frequency of exchange of the zeolite formed body, in the method for producing a purified gas according to the present embodiment.

In the method for producing a purified gas according to the present embodiment, a zeolite formed body in which the ratio of apparent density $d_a$/true density dt is 0.36 or more, or a zeolite formed body in which the ratio of bulk density $d_b$/true density dt is 0.25 or more, is preferably used as the adsorbent. The foregoing configuration can provide a second component gas at a high yield and recover high-purity $CO_2$.

The above apparent density $d_a$, bulk density $d_b$, and true density dt, the ratio of apparent density $d_a$/true density dt, and the ratio of bulk density $d_b$/true density dt are preferably respectively within the same ranges as the ranges described with respect to the zeolite formed body.

<Second component gas>

The second component gas may be a gaseous material different from carbon dioxide. The "gaseous material" means a substance which is gaseous under an ordinary temperature of 25°C and an ordinary pressure. Examples of the second component gas include methane, ethane, nitrogen, carbon monoxide, hydrogen, argon, and dimethyl ether. Among these second component gases, methane, ethane, and nitrogen are preferable, methane and ethane are more preferable, and methane is further preferable.

<Gas mixture>

The gas mixture used as a starting material includes carbon dioxide and a second component gas.

The content of carbon dioxide in the gas mixture may be 1% by volume to 99% by volume, 5% by volume to 90% by volume, 10% by volume to 80% by volume, 20% by volume to 70% by volume, or 30% by volume to 70% by volume.

The content of the second component gas in the gas mixture may be 1% by volume to 99% by volume, 5% by volume to 90% by volume, 10% by volume to 80% by volume, 20% by volume to 70% by volume, or 30% by volume to 70% by volume.

The moisture content in the gas mixture is preferably 1000 ppm by volume or less, more preferably 500 ppm by volume or less, further preferably 100 ppm by volume or less. The moisture content can be within the above range to allow adsorption performance of the adsorbent to be highly exhibited. The moisture content in the gas mixture can be determined by, for example, converting one measured with a dew-point meter into the moisture content by the method described in JIS Z8806:2001.

<Adsorption tower>

The adsorption tower is packed with an adsorbent. The adsorption tower is configured so as to allow for introduction of the gas mixture and then contact of the gas mixture with the adsorbent. In the adsorption step, the gas mixture is contacted with the adsorbent to adsorb carbon dioxide in the gas mixture to the adsorbent. Since carbon dioxide is adsorbed in the gas mixture, the second component gas can be taken out. After the adsorption step, the adsorption tower can be under reduced pressure to take out carbon dioxide in the desorption step. Thus, a purified gas of the second component gas and a purified gas of carbon dioxide are obtained in the adsorption step and the desorption step. The adsorption tower may be provided with a heater for temperature rise in the adsorption tower.

<Conditions of adsorption step and desorption step>

The adsorption step and the desorption step may be each repeatedly performed plural times or more. The adsorption step of carbon dioxide is performed at a pressure close to ordinary pressure with flow of the gas mixture in the adsorption tower. Subsequently, the adsorption tower is under reduced pressure, and the desorption step of desorbing carbon dioxide from the adsorbent is performed. The adsorption step and the desorption step are thus repeatedly performed, to separate carbon dioxide and the second component gas, and the zeolite formed body according to the present embodiment can be used to result in enhancements in recovery purity of carbon dioxide and recovery rate of the second component gas.

The ultimate pressure $P_b$ in the desorption step is preferably 50 kPa or less, more preferably 30 kPa or less, further preferably 20 kPa or less, further preferably 15 kPa or less, further preferably 10 kPa or less, further preferably 5 kPa or less, further preferably 3 kPa or less. The ultimate pressure $P_b$ means the pressure around an exhaust outlet of the adsorption tower, through which evacuation from the adsorption tower packed with the adsorbent is performed, and means the pressure which is ultimately made constant with a gradual reduction in pressure of the adsorption tower due to evacuation.

The average temperature in the desorption step is preferably 0°C or more, preferably 10°C to 400°C, further preferably 25°C to 300°C, still further preferably 25°C to 200°C from the viewpoints of an increase in efficiency of desorption of carbon dioxide and a reduction in power per gas mixture to be treated. The average temperature in the desorption step means the average temperature of a desorption gas (carbon dioxide) around an outlet of the adsorption tower in the desorption step. The temperature is here sometimes gradually changed due to endotherm occurring by desorption of carbon dioxide from the adsorbent in the desorption step.

The adsorption pressure $P_a$ in the adsorption step is preferably 50 to 3000 kPa, more preferably 60 to 500 kPa or less, further preferably 70 to 200 kPa or less. The adsorption pressure $P_a$ means the pressure around an inlet of the adsorption tower, through which the gas mixture is introduced.

The average temperature in the adsorption step is preferably 0°C or more, preferably 10°C to 400°C, further preferably 25°C to 300°C, still further preferably 25°C to 200°C from the viewpoints of an increase in efficiency of desorption of carbon dioxide and a reduction in power per gas mixture to be treated in the desorption step to be performed later. The average temperature in the adsorption step means the average temperature of a gas around an outlet of the adsorption tower in the adsorption step. The temperature is here sometimes gradually changed due to exotherm by adsorption of carbon dioxide to the adsorbent in the adsorption step.

The total recovery rate of carbon dioxide from the gas mixture in the method for producing a purified gas according to the present embodiment is preferably 90% or more, more preferably 93% or more, further preferably 95% or more. The total recovery rate here means the total amount of carbon dioxide recovered, based on the total amount of carbon dioxide in the gas mixture introduced into the adsorption tower.

The total recovery rate of the second component gas from the gas mixture in the method for producing a purified gas according to the present embodiment is 90% or more, more preferably 93% or more, further preferably 95% or more.

The total recovery rate here means the total amount of the second component gas recovered, based on the total amount of the second component gas in the gas mixture introduced into the adsorption tower.

In the method for producing a purified gas according to the present embodiment, the total recovery rate of carbon dioxide from the gas mixture and the total recovery rate of the second component gas from the gas mixture are preferably 90% or more and 90% or more respectively, the total recovery rate of carbon dioxide from the gas mixture and the total recovery rate of the second component gas from the gas mixture are more preferably 93% or more and 93% or more respectively, and the total recovery rate of carbon dioxide from the gas mixture and the total recovery rate of the second component gas from the gas mixture are further preferably 95% or more and 95% or more respectively.

The purity of the second component gas obtained by the method for producing a purified gas according to the present embodiment is preferably 90% by volume or more, more preferably 93% by volume or more, further preferably 95% by volume or more.

The purity of carbon dioxide obtained by the method for producing a purified gas according to the present embodiment is preferably 90% by volume or more, more preferably 92% by volume or more, further preferably 95% by volume or more.

The moisture content in carbon dioxide obtained by the method for producing a purified gas according to the present embodiment is preferably 500 ppm by volume or less, more preferably 300 ppm by volume or less, further preferably 100 ppm by volume or less. The moisture content in carbon dioxide can be measured with, for example, a dew-point meter. The moisture content in carbon dioxide can be lower than the above value by adoption of zeolite as the adsorbent in the method for producing a purified gas.

The method for producing a purified gas according to the present embodiment provides a purified second component gas or purified carbon dioxide.

<Activation step>

The method for producing a purified gas according to the present embodiment preferably includes an activation step of increasing the temperature and reducing the pressure in the adsorption tower to desorb moisture from the adsorbent. The activation step can allow for activation of the adsorbent, adsorption of moisture in a gas to be treated, and decrease of moisture in the resulting carbon dioxide and second component gas. The activation step is preferably carried out before the above adsorption step and desorption step. The activation step may also be carried out, once the adsorption step and desorption step are repeatedly performed and the adsorbent adsorbs a large amount of moisture.

The ultimate pressure $P_e$ in the activation step is preferably 50 kPa or less, more preferably 30 kPa or less, further preferably 20 kPa or less, further preferably 15 kPa or less, further preferably 10 kPa or less, further preferably 5 kPa or less, further preferably 3 kPa or less. The ultimate pressure $P_e$ means the pressure around an exhaust outlet of the adsorption tower, through which evacuation from the adsorption tower packed with the adsorbent is performed, and means the pressure which is ultimately made constant with a gradual reduction in pressure of the adsorption tower due to evacuation.

The temperature in the adsorption tower in the activation step is preferably 150°C or more, more preferably 180°C to 300°C, further preferably 200°C to 280°C.

[Purified gas production system]

A schematic configuration of a purified gas production system 100 according to the present embodiment is described with reference to Figure 2. The purified gas production system 100 includes a gas mixture supply line 1, a carbon dioxide adsorption tower 3a and a carbon dioxide adsorption tower 3b, a carbon dioxide recovery line 5, a second component gas recovery line 7, and a pressure reduction device 9.

The carbon dioxide adsorption tower 3a includes a fixed bed 31a packed with an adsorbent constituted so as to be capable of contacting with the gas mixture introduced into the tower. The carbon dioxide adsorption tower 3a has one end connected to the gas mixture supply line 1 and other end connected to the second component gas recovery line 7. The second component gas recovery line 7 is provided with an automatic valve AV3. The second component gas recovery line 7 is also provided with a flowmeter 71, a moisture meter 72 and a component analyzer 73. The component analyzer 73 here used may be an analyzer capable of measuring the concentration of carbon dioxide and the concentration of the second component gas.

The carbon dioxide adsorption tower 3a is connected to the carbon dioxide recovery line 5 at an end portion in the same direction as the direction in which an end portion connected to the gas mixture supply line 1 is located. The gas mixture supply line 1 is provided with a flowmeter 11, a moisture meter 12, and a component analyzer 13. The carbon dioxide adsorption tower 3a is provided with an automatic valve AV1 at an inlet thereof. On the other hand, the pressure reduction device 9 is connected to the carbon dioxide recovery line 5, and is configured so as to be capable of reducing the pressure in the carbon dioxide adsorption tower 3a. The pressure reduction device 9 may be a vacuum pump. The carbon dioxide recovery line 5 connected to the carbon dioxide adsorption tower 3a is provided with an automatic valve AV5 and a manometer 53a. Furthermore, the carbon dioxide recovery line 5 is provided with a flowmeter 51, a moisture meter 52 and a component analyzer 54. The component analyzer 54 here used may be an analyzer capable of measuring the concentration of carbon dioxide and the concentration of the second component gas.

The carbon dioxide adsorption tower 3b includes a fixed bed 31b including an adsorbent constituted so as to be capable of contacting with the gas mixture introduced into the tower. The carbon dioxide adsorption tower 3b is provided with an automatic valve AV2 at an inlet thereof. The carbon dioxide adsorption tower 3b has one end connected to the gas mixture supply line 1 and other end connected to the second component gas recovery line 7. The second component gas recovery line 7 is provided with an automatic valve AV4. The carbon dioxide adsorption tower 3b is also connected to the carbon dioxide recovery line 5 at an end portion in the same direction as the direction in which an end portion connected to the gas mixture supply line 1 is located. The carbon dioxide recovery line 5 connected to the carbon dioxide adsorption tower 3b is provided with an automatic valve AV6 and a manometer 53b.

Next, the operation of the purified gas production system 100 of the present embodiment is described with reference to Figure 2. The gas mixture is supplied to the carbon dioxide adsorption tower 3a via the gas mixture supply line 1. Then, carbon dioxide ($CO_2$) included in the gas mixture is adsorbed by the adsorbent packed in the carbon dioxide adsorption tower 3a, and the second component gas such as methane ($CH_4$) is recovered from the second component gas recovery line 7. In other words, an adsorption step of introducing the gas mixture into the adsorption tower to adsorb carbon dioxide by the adsorbent and to take out the second component gas is performed in the carbon dioxide adsorption tower 3a.

The carbon dioxide adsorption tower 3a, which includes the adsorbent adsorbing carbon dioxide, is subjected to evacuation of carbon dioxide by the pressure reduction device 9, and thus not only the adsorbent in the carbon dioxide adsorption tower 3a is reproduced, but also carbon dioxide purified is taken out. In other words, a carbon dioxide desorption step of evacuating carbon dioxide from the adsorption tower to take out carbon dioxide is performed.

The carbon dioxide adsorption tower 3a and the carbon dioxide adsorption tower 3b allow carbon dioxide adsorption by introduction of the gas mixture and carbon dioxide desorption by pressure reduction to be repeatedly performed as descried above. While carbon dioxide is desorbed in the carbon dioxide adsorption tower 3a, the gas mixture is introduced to adsorb carbon dioxide in the carbon dioxide adsorption tower 3b. After the completion of desorption of carbon dioxide in the carbon dioxide adsorption tower 3a, the gas mixture is again introduced into the carbon dioxide adsorption tower 3a and the pressure in the carbon dioxide absorption tower 3b is reduced to desorb carbon dioxide, and thus adsorption-desorption of carbon dioxide can be repeated to perform continuous treatment of the gas mixture in these towers.

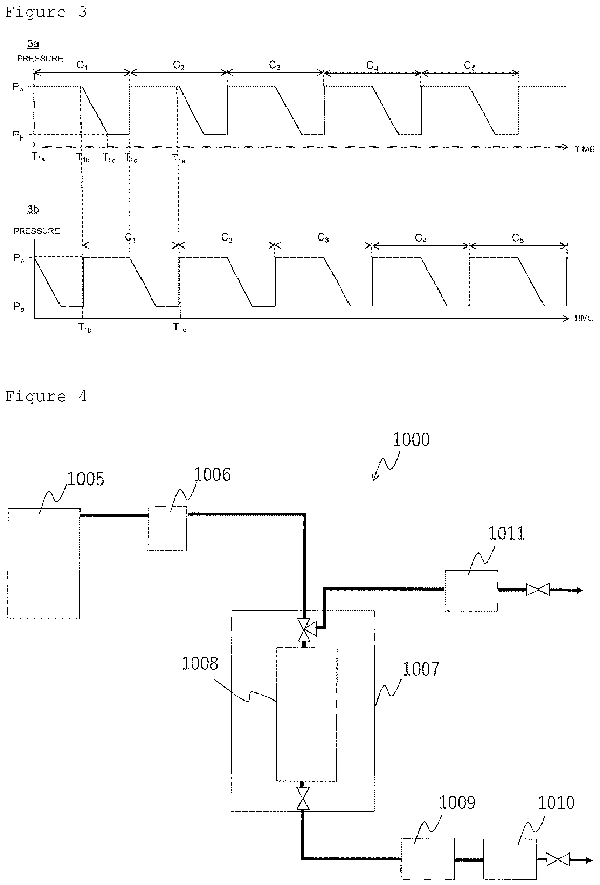

More specifically, these towers can be operated according to the following procedure. Figure 3 is a schematic view illustrating the respective changes in pressure variation over time of the carbon dioxide adsorption tower 3a and the carbon dioxide adsorption tower 3b due to the operation of the purified gas production system 100. At a time point $T_{1a}$ in Figure 3, the automatic valves AV1 and AV3, among all the automatic valves AV1 to AV6 closed, are then opened, and the gas mixture is supplied to the carbon dioxide adsorption tower 3a at the adsorption pressure $P_a$ (for example, 105 kPa) with the flowmeter 11 being checked so that the predetermined flow rate to the gas mixture supply line 1 is achieved. When the concentration of carbon dioxide exceeds 5% by volume in the component analyzer 73 (for example, time point $T_{1b}$ in Figure 3), supply of the gas mixture may be switched to the carbon dioxide adsorption tower 3b from the carbon dioxide adsorption tower 3a by closing the automatic valve AV1 and the automatic valve AV3 and at the same time opening the automatic valve AV2 and the automatic valve AV4. Such switching allows the gas mixture to be supplied to the carbon dioxide adsorption tower 3b at the adsorption pressure $P_a$ (for example, 105 kPa). The carbon dioxide adsorption tower 3a is reduced in pressure due to pressure reduction with the pressure reduction device 9 by opening the automatic valve AV5 with the automatic valve AV3 being closed, and carbon dioxide is recovered from the carbon dioxide adsorption tower 3a by desorption operation at the ultimate pressure $P_b$ (for example, 2 kPa) of the carbon dioxide adsorption tower 3a. The time point at which the pressure reaches the ultimate pressure $P_b$ is defined as $T_{1c}$. Carbon dioxide adsorbed by the adsorbent in the carbon dioxide adsorption tower 3a is desorbed, and thus not only carbon dioxide is recovered, but also the adsorbent is reproduced.

Subsequently, when the concentration of carbon dioxide in the gas flowing out of the carbon dioxide adsorption tower 3b exceeds 5% by volume, supply of the gas mixture may be switched to the tower 3a from the carbon dioxide adsorption tower 3b (the time point is defined as $T_{1d}$) by closing the automatic valve AV2 and the automatic valve AV4 and at the same time opening the automatic valve AV1 and the automatic valve AV3. The carbon dioxide adsorption tower 3b is reduced in pressure due to pressure reduction with the pressure reduction device 9 by opening the automatic valve AV6 and desorption operation is performed at a pressure of the carbon dioxide adsorption tower 3b, of 2 kPa, and thus carbon dioxide is recovered from the carbon dioxide adsorption tower 3b. Thereafter, when the concentration of carbon dioxide exceeds 5% by volume in the component analyzer 73 (for example, time point $T_{1e}$ in Figure 3), supply of the gas mixture may be again switched to the carbon dioxide adsorption tower 3b from the carbon dioxide adsorption tower 3a by closing the automatic valve AV1 and the automatic valve AV3 and at the same time opening the automatic valve AV2 and the automatic valve AV4.

The above series of operations from the time points $T_{1a}$ to $T_{1d}$ correspond to an operation of the first cycle $C_1$ of the pressure variation in the carbon dioxide adsorption tower 3a. The above series of operations from the time points $T_{1b}$ to

$T_{1e}$ correspond to an operation of the first cycle $C_1$ of the pressure variation in the carbon dioxide adsorption tower 3b. In other words, the cycle $C_1$ includes one adsorption step and one desorption step. The same operations may be repeated to repeatedly perform the second cycle $C_2$ and the third cycle $C_3$ of the pressure variation, and such adsorption step and desorption step.

The purified gas production system 100 may be applied to, for example, purification of an industrial exhaust gas including carbon dioxide, a biogas obtained from fermentation of an organic substance, and the like. Among them, the system is suitably used for purification of the biogas.

Examples

Hereinafter, the present embodiment will be described with reference to Examples and the like in more detail, but such Examples are illustrative, and the present embodiment is not intended to be limited to the following Examples.

[Measurement of apparent density $d_a$]

The apparent density $d_a$ of the zeolite formed body was measured by the following procedure.

(1) 100 mL of liquid paraffin was placed in a 250-mL measuring cylinder, and the initial liquid level was measured.
(2) The mass W (g) of about 80 mL of the zeolite formed body was measured.
(3) The water content ratio u (unit: % by mass) of the zeolite formed body was measured with an infrared moisture meter "FD-660" (trade name) manufactured by Kett Electric Laboratory Co. Ltd.
(4) The zeolite formed body weighed was charged into the liquid paraffin in the measuring cylinder, and the volume $V_a$ ($cm^3$) of the zeolite formed body charged was calculated from the amount corresponding to the rise of the liquid level of the liquid paraffin after 10 minutes. The apparent density $d_a$ was calculated with the mass W (g) and the volume $V_a$ ($cm^3$) of the zeolite formed body charged, from the following expression.

$$d_a = (W - W \times u/100)/V_a (g/cm^3)$$

[Measurement of bulk density $d_b$]

The bulk density $d_b$ of the zeolite formed body was measured by the following procedure.

(1) About 800 mL of the zeolite formed body was packed in a 1000-mL measuring cylinder. When such packing was made, the zeolite formed body was hammered with a rubber hammer every charging of about 50 mL thereof, until no change in packing height of the formed body.
(2) The packing volume Vb ($cm^3$) of the zeolite formed body was read from the graduation mark of the measuring cylinder.
(3) The mass W (g) of the zeolite formed body packed was measured with an electronic balance whose minimum measurement value was 0.01 g.
(4) The water content ratio u (unit: % by mass) of the zeolite formed body was measured with an infrared moisture meter "FD-660" (trade name) manufactured by Kett Electric Laboratory Co. Ltd.
(5) The bulk density $d_b$ ($g/cm^3$) was determined with the mass W and the water content ratio u respectively measured in (3) and (4) above and the packing volume $V_b$ read in (2) above, from the following expression.

$$d_b = (W - W \times u/100)/V_b (g/cm^3)$$

[Measurement of true density dt]

The true density dt of the zeolite formed body was measured by the following procedure.

(1) The volume $V_1$ ($cm^3$) of an empty measurement cell was measured by use of a high-purity helium gas having a purity of 99.9% or more in a water tank controlled to 25°C, with a high-accuracy gas adsorption analyzer "BELSORP MAX II" (trade name) manufactured by MicrotracBEL.
(2) About 0.2 g of the zeolite formed body was packed in the measurement cell subjected to the volume measurement in (1) above, and dried under vacuum with a pretreatment system "BELPREP-VACIII" (trade name) manufactured by MicrotracBEL at 250°C for 3 hours or more.
(3) The cell dried was still left under vacuum and cooled to room temperature, and the volume $V_2$ ($cm^3$) of the

measurement cell in packing of the zeolite formed body was measured in the same manner as in (1) above.

(4) The mass W (g) of the zeolite formed body in the cell subjected to measurement of the volume $V_2$ was measured with a precision balance whose minimum measurement value was 0.0001 g.

(5) The true density dt ($g/cm^3$) of the zeolite formed body was calculated with the volumes $V_1$ ($cm^3$) and $V_2$ ($cm^3$) of the cell and the mass W (g) of the zeolite formed body packed, from the following expression.

$$\text{True density } d_t = W/(V_1 - V_2)$$

[X-Ray diffraction; crystal structure analysis]

X-Ray diffraction was performed according to the following procedure.

(1) A zeolite formed body (dried product after treatment at 350°C for 24 hours) obtained in each of Examples and Comparative Examples was used as a sample, and pulverized by an agate mortar. A mixed product was used as a structure analysis sample, the product being obtained by further adding 10% by mass of crystalline silicon (produced by Rare Metallic Co., Ltd.) to the zeolite formed body (dried product) and mixing the resultant by an agate mortar until a homogeneous system was obtained.

(2) The sample in (1) above was uniformly secured on a non-reflective sample plate for powder, and crystal structure analysis was performed by X-ray diffraction in the following conditions.

X-ray diffraction system (XRD): powder X-ray diffraction system "RINT2500 Model" (trade name) manufactured by Rigaku Corporation
X-ray source: Cu tube (40 kV, 200 mA)
Measurement temperature: 25°C
Measurement range: 5 to 60°(0.02°/step)
Measurement speed: 0.2°/min
Slit width (scattering, diffusion, light reception): 1°, 1°, 0.15 mm

[Measurements of $^{29}$Si-MAS-NMR spectrum and SAR]

The SAR of the zeolite in the zeolite formed body can be determined by measurement of $^{29}$Si-MAS-NMR. First, water was put on the bottom of a desiccator, for humidity conditioning of a zeolite, and a zeolite placed in a sample tube was retained thereon for 48 hours. After humidity conditioning treatment, $^{29}$Si-MAS-NMR measurement was performed under the following conditions.

System: JEOL RESONANCE ECA700
Magnetic field intensity: 16.44 T ($^{1}$H resonant frequency 700 MHz)
Measurement nucleus: $^{29}$Si
Resonant frequency: 139.08 MHz
NMR tube: 4 mm$\varphi$ (rotor made of zirconia)
Measurement method: DD/MAS (dipolar decoupling magic angle spinning)
Pulse width: 45°
Waiting time: 50 sec
Cumulated number: 800 (measurement time; about 22 hours)
MAS: 10,000 Hz
Chemical shift reference: silicone rubber (-22.34 ppm), external reference
A formed body including a GIS-type zeolite shows the following five peaks in a $^{29}$Si-MAS-NMR spectrum.

(1) Q4(0Al): peak assigned to Si not bound with any Al via oxygen
(2) Q4(1Al): peak assigned to Si bound with one Al atom via oxygen
(3) Q4(2Al): peak assigned to Si bound with two Al atoms via oxygen
(4) Q4(3Al): peak assigned to Si bound with three Al atoms via oxygen
(5) Q4(4Al): peak assigned to Si bound with four Al atoms via oxygen

The peak positions in a $^{29}$Si-MAS-NMR spectrum are generally present at -112 ppm to -80 ppm, and can be assigned to Q4(0Al), Q4(1Al), Q4(2Al)l, Q4(3Al), or Q4(4Al) from the high magnetic field side. While the peak positions can be changed depending on cationic species present in the zeolite backbone, the peak positions are generally present in the following ranges.

(1) Q4(0Al): -105 ppm to -112 ppm
(2) Q4(1Al): -100 ppm to -105 ppm
(3) Q4(2Al): -95 ppm to -100 ppm
(4) Q4(3Al): -87 ppm to -95 ppm
(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio (xG/(1 - x)L), according to the algorithm of the least squares method. When the areas of the respective peaks of Q4(0Al), Q4(1Al), Q4(2Al), Q4(3Al), and Q4(4Al) are defined as A_Q4(0Al), A_Q4(1Al), A_Q4(2Al), A_Q4(3Al), and A_Q4(4Al), and the total value of A_Q4(0Al), A_Q4(1Al), A_Q4(2Al), A_Q4(3Al), and A_Q4(4Al) is defined as A_total, the SAR can be determined according to the following.

SAR = 100/[A_Q4(1Al)/4 + 2 × A_Q4(2Al)/4 + 3 × A_Q4(3Al)/4 + 4 × A_Q4(4Al)/4] × 2

[Embrittlement resistance evaluation of zeolite formed body under $CO_2$ atmosphere]

Embrittlement resistance evaluation of a zeolite formed body obtained in each of Examples and Comparative Examples, under a $CO_2$ atmosphere, was performed according to the following procedure.

(1) 100 g of the zeolite formed body was weighed, the shorter diameter of the zeolite formed body was measured, and the average value of the shorter diameter of the zeolite formed body was defined as ds. A sieve having an aperture being smaller than ds and also having the largest aperture was selected and prepared from those having apertures published in JIS Z 8801-1, the zeolite formed body was subjected to the sieve, and the remaining zeolite formed body on the sieve was adopted as a test sample for use in the embrittlement resistance evaluation under a $CO_2$ atmosphere.
(2) The test sample was dried under a $N_2$ atmosphere at 200°C for 3 hours. The test sample was cooled to room temperature under a $N_2$ atmosphere, and then exposed to $CO_2$ at room temperature for 30 minutes.
(3) The mass W1 of the test sample after exposure to $CO_2$ was measured, and then subjected to the sieve having the aperture, and the mass W2 of the zeolite formed body passing through the sieve was measured. The value calculated by the expression (1) was defined as the powdering rate [% by mass] of the zeolite formed body, and a zeolite formed body lower in powdering rate was evaluated to be a formed body having embrittlement resistance under a $CO_2$ atmosphere.

$$\text{Powdering rate} \quad [\% \text{ by mass}] = \frac{W2 \ [g]}{W1 \ [g]} \times 100 \quad \cdots \quad \text{Expression (1)}$$

[Contents of alkali metals]

Each zeolite was thermally dissolved in an aqueous sodium hydroxide solution or aqua regia, and appropriately diluted to provide a liquid, and the liquid was used to measure the concentrations of alkali metals in the zeolite by ICP-emission spectrochemical analysis (hereinafter, also referred to as "ICP-AES", system name: SPS3520UV-DD, manufactured by Hitachi High-Tech Science Corporation). The contents of potassium and lithium in the zeolite were calculated in terms of the ratio (Z/T) of the total value (Z) of the amount of substance of potassium and lithium to the total value (T) of the amount of substance of alkali metals in the zeolite. The K/T was also calculated in the same manner.

[Amount of adsorption of $CO_2$ and amount of hysteresis; Gas adsorption-desorption isotherm measurement]

Gas adsorption-desorption isotherm measurement was performed according to the following procedure.

(1) A dried product obtained in each of Examples and Comparative Examples was used as a sample, and 0.2 g thereof was placed in a 12-mm cell (manufactured by Micromeritics Instrument Corporation).
(2) The sample placed in the cell of (1) above was mounted in a gas adsorption measuring system "3-Flex" (trade name) manufactured by Micromeritics Instrument Corporation, and subjected to a degassing treatment with heating under vacuum at 250°C and 0.001 mmHg or less for 12 hours.

(3) The sample placed in the cell after the treatment in (2) above was placed in constant-temperature circulating water at 25°C, and, after the sample temperature reached 25 ± 0.2°C, measurement with liquefied carbon dioxide gas (produced by Sumitomo Seika Chemicals Co., Ltd., purity: 99.9% by mass or more) was conducted with the absolute pressure being 0.25 up to 760 mmHg. Here, the pressure was measured over time during the measurement, and it was determined that the amount of saturation adsorption was achieved when the pressure variation reached 0.001%/10 sec or less, and the amount of saturation adsorption was defined as the amount of adsorption of $CO_2$ (unit: $cm^3/g$) at 25°C.

(4) Following the measurement of (3) above, the pressure was reduced over time from an absolute pressure of 760 to 0.25 mmHg, and desorption isotherm measurement of carbon dioxide was performed. For determination of equilibrium, measurement was performed in the same manner as (3) at a pressure variation of 0.001%/10 sec or less.

(5) The index representing the amount of hysteresis in an adsorption-desorption isotherm of carbon dioxide was as follows: when the amount of equilibrium adsorption at 75 mmHg in the adsorption isotherm measured in (3) and the amount of equilibrium adsorption at 75 mmHg in the desorption isotherm measured in (4) were respectively defined as q(Ad) and q(De), q(Ad)/q(De) was defined as the index representing the amount of hysteresis. A case of q(Ad)/q(De) = 1.00 indicates no hysteresis, and a smaller q(Ad)/q(De) indicates a state of a larger hysteresis.

[Amount of adsorption of $CH_4$; Gas adsorption isotherm measurement]

Gas adsorption isotherm measurement was performed according to the following procedure.

(1) A dried product obtained in each of Examples and Comparative Examples was used as a sample, and 0.2 g thereof was placed in a 12-mm cell (manufactured by Micromeritics Instrument Corporation).

(2) The sample placed in the cell of (1) above was mounted in a gas adsorption measuring system "3-Flex" (trade name) manufactured by Micromeritics Instrument Corporation, and subjected to a degassing treatment with heating under vacuum at 250°C and 0.001 mmHg or less for 12 hours.

(3) The sample placed in the cell after the treatment in (2) above was placed in constant-temperature circulating water at 35°C, and, after the sample temperature reached 25 ± 0.2°C, measurement with methane gas (produced by Fujii Shoji Co., Ltd., purity: 99.99% by mass or more) was conducted with the absolute pressure being 0.25 up to 760 mmHg. Here, the pressure was measured over time during the measurement and it was determined that the amount of saturation adsorption was achieved when the pressure variation reached 0.001%/10 sec or less, and the amount of saturation adsorption was defined as the amount of adsorption of $CH_4$ (unit: $cm^3/g$) at 25°C.

[Amount of adsorption of $N_2$; gas adsorption isotherm measurement]

Gas adsorption isotherm measurement was performed according to the following procedure.

(1) A dried product obtained in each of Examples and Comparative Examples was used as a sample, and 0.2 g thereof was placed in a 12-mm cell (manufactured by Micromeritics Instrument Corporation).

(2) The sample placed in the cell of (1) above was mounted in a gas adsorption measurement system "3-Flex" (trade name) manufactured by Micromeritics Instrument Corporation, and subjected to a degassing treatment with heating under vacuum at 250°C and 0.001 mmHg or less for 12 hours.

(3) The sample placed in the cell after the treatment in (2) above was placed in constant-temperature circulating water at 35°C, and, after the sample temperature reached 25 ± 0.2°C, measurement with nitrogen gas (produced by Taiyo Nippon Sanso Corporation, purity: 99.99% by mass or more) was conducted with the absolute pressure being 0.25 up to 760 mmHg. Here, the pressure was measured over time during the measurement, and it was determined that the amount of saturation adsorption was achieved when the pressure variation reached 0.001%/10 sec or less, and the amount of saturation adsorption was defined as the amount of adsorption of $N_2$ (unit: $cm^3/g$) at 25°C.

[Gas separation performance evaluation; recovery purity of $CO_2$ and recovery rate of $CH_4$]

The recovery purity of $CO_2$ and the recovery rate of $CH_4$ of a zeolite formed body produced in each of Examples or Comparative Examples were measured with a gas separation performance evaluation system 1000 illustrated in Figure 4, according to the following procedure.

(1) A container 1008 was packed with 2500 $cm^3$ of a zeolite formed body produced in each of Examples or Comparative Examples, and mounted in a constant-temperature bath 1007.

(2) The constant-temperature bath of (1) above was retained at 250°C for 12 hours or more, water and a gas molecule adsorbed by the zeolite formed body were desorbed, and then the constant-temperature bath was cooled to 35°C and retained.

(3) A starting material gas to be separated was packed in a starting material gas tank 1005. The composition of the starting material gas had 40% by volume of $CO_2$ and 60% by volume of $CH_4$.

(4) The flow rate of the starting material gas was adjusted by a mass flow controller 1006 so as to be 15 NL/min, and the starting material gas was allowed to flow so as to be contacted with the zeolite formed body packed in the container 1008. The ratio of the amount of a $CH_4$ gas measured with a mass flowmeter 1009 to the amount of a $CH_4$ gas passing through the container 1008 until the $CO_2$ concentration measured with a $CO_2$ concentration meter 1010 reached 40% by volume was defined as the recovery rate of $CH_4$ (unit: % by volume).

(5) Once the $CO_2$ concentration measured with the $CO_2$ concentration meter 1010 reached 40% by mass, introduction of the starting material gas to the container 1008 was stopped, and the pressure was reduced by a pressure reduction device 1011 to provide a pressure in the container 1008 of 2 kPa and then perform a desorption operation, thereby recovering a gas from the container 1008.

(6) The volume of the gas recovered (unit: L) was measured with an integrating flowmeter.

(7) The amount of substance of each of $CO_2$ and $CH_4$ included in the gas recovered of (5) above was measured with gas chromatograph "GC-2014" (trade name) manufactured by Shimadzu Corporation, in the following conditions.

Carrier gas: He (purity 99.9% or more)
Column: "CarboBOND" (trade name) manufactured by Agilent Technologies, Inc.
Column temperature: 40°C
Detector: TCD

The amount of substance of each of $CO_2$ and $CH_4$ was calculated from the area of the peak, based on the calibration curve.

(8) The volume of $CO_2$ included in the gas recovered was calculated from the volume of the gas recovered, measured in (6) above, and the ratio of the amount of substance of $CO_2$ and that of $CH_4$, measured in (7) above. The ratio of the volume of $CO_2$ included in the gas recovered, to the volume of the gas recovered was defined as the recovery purity of $CO_2$ (unit: % by volume).

[Pressure loss]

Evaluation of the pressure loss in the zeolite formed body was performed according to the following procedure.

(1) The zeolite formed body was packed up to a height of 1m in a vinyl chloride tube in which a metallic mesh having an aperture of 1.5 mm was secured on the bottom surface and which had an inner diameter of 52 mm and a height of 1.5 m. When such packing was made, the vinyl chloride tube was hammered with a rubber hammer every packing by about 10 cm, until no change in packing height.

(2) A gas flow line was connected to each of the upper end and the lower end of the vinyl chloride tube of (1) above.

(3) A digital differential pressure gauge was connected to a point at which the difference in pressure between the upper end and the lower end of the vinyl chloride tube of (2) above was measurable.

(4) The value displayed by the digital differential pressure gauge in introduction of compressed air at a superficial velocity of 1 m/s through the gas flow line connected to the upper end in (2) above was defined as the pressure loss (unit: kPa).

[Measurement of length and diameter of zeolite formed body]

The zeolite formed body, which had a cylindrical form, was subjected to measurement of the length and the diameter of a pellet by a caliper method. In such measurement, a caliper having a minimum read value of 0.1 mm or less was used to perform such measurement with respect to three samples, and the respective average values were defined as the length and the diameter.

The zeolite formed body, which had a spherical form, was stably left to still stand on a horizontal surface, and aligned with a precision linear scale having a minimum read value of 0.5 mm or less, and a projection image was taken in the vertical direction of the formed body. The projection image of the formed body was sandwiched between two mutual parallel straight lines each contacting with the projection image, and the interval corresponding to the largest interval between such parallel lines was defined as the longer diameter and the interval corresponding to the smallest interval between such parallel lines was defined as the shorter diameter. The real longer diameter and shorter diameter of the formed body were calculated from the lengths of the graduation marks of the linear scale in the image. The measurement was performed with respect to three samples, and the average value of the six diameters calculated was defined as the diameter of such a spherical formed body.

[Measurement of degree of weight reduction]

The degree of weight reduction (unit: g) of 1.2 g of a zeolite formed body obtained in each of Examples and Comparative Examples, under conditions of 300°C and 2 hours, was measured by the following procedure.

> (1) 1.2 g of the zeolite formed body was weighed, and dried under a $N_2$ atmosphere at 180°C for 3 hours.
> (2) The zeolite formed body dried was weighed in a glove box.
> (3) The zeolite formed body after weighing was heated under an air atmosphere at 300°C for 2 hours.
> (4) After the temperature was dropped to room temperature under sealing so that no moisture absorption was caused, the zeolite formed body was weighed in a glove box.

The difference between the weight of the zeolite formed body weighed in procedure (2) and the weight of the zeolite formed body weighed in procedure (4) was defined as the degree of weight reduction, and it was evaluated that, as the value thereof was closer to 0, the zeolite formed body was low in degree of weight reduction and had durability.

[Measurement of powdering rate after exposure to high temperature]

The powdering rate of the zeolite formed body after measurement of the degree of weight reduction was carried out was measured according to the same procedure as in "Evaluation of durability of zeolite formed body under $CO_2$ atmosphere" described above. The powdering rate thus measured was defined as the powdering rate [% by mass] after exposure to high temperature, and it was evaluated that, as the value thereof was closer to 0, the zeolite formed body had more excellent durability.

Hereinafter, specific aspects of the zeolite formed body according to the present embodiment, including a zeolite capable of adsorbing carbon dioxide, in which the zeolite formed body has an apparent density $d_a$ of 0.75 or more, are shown. Such aspects are illustrative, and the present embodiment is not intended to be limited to the following Examples.

[Production Example 1]

61.93 g of water, 0.403 g of sodium hydroxide (NaOH, produced by FUJIFILM Wako Pure Chemical Corporation), 3.39 g of sodium nitrate (NaNO3, produced by FUJIFILM Wako Pure Chemical Corporation), 1.64 g of sodium aluminate (NaAlO$_2$, produced by FUJIFILM Wako Pure Chemical Corporation) and 10.82 g of colloidal silica (Ludox AS-40, solid concentration: 40% by mass, produced by W. R. Grace & Co.-Conn.) were mixed, and stirred for 30 minutes, thereby preparing a mixed gel. The composition of the mixed gel was as follows: $\alpha$ = E/Al$_2$O$_3$ = 4.53, $\beta$ = SiO$_2$/Al$_2$O$_3$ = 8.17, $\gamma$ = Na$_2$O/Al$_2$O$_3$ = 3.99, $\delta$ = P$_2$O$_5$/Al$_2$O$_3$ = 0.00, $\varepsilon$ = H$_2$O/Al$_2$O$_3$ = 431.0, $\zeta$ = H$_2$O/OH$^-$ = 376.7, and $\eta$ = R/Al$_2$O$_3$ = 0.00. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 135°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an X-Ray diffraction spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

The silica/alumina ratio was calculated from a $^{29}$Si-MAS-NMR spectrum of the resulting zeolite, and as a result, SAR was 6.90 and (a + d)/(b + c) = 0.305 was satisfied. In addition, the contents of potassium and lithium in the zeolite satisfied Z/T = 0.00 (= K/T). The adsorption isotherm and the desorption isotherm of $CO_2$ into the resulting GIS-type zeolite were measured, thus the amount of adsorption at 760 mmHg was 82.2 cm$^3$/g and q(Ad)/q(De) was 0.984. The adsorption isotherm of $CH_4$ was measured in the same manner, and thus the amount of adsorption at 760 mmHg was 6.2 cm$^3$/g.

[Production Example 2]

61.65 g of water, 0.60 g of an aqueous sodium hydroxide solution (NaOH, concentration: 48% by mass, produced by Tokuyama Corporation), 2.27 g of sodium carbonate (Na$_2$CO$_3$, produced by Tokuyama Corporation), 1.64 g of sodium aluminate (NaAlO$_2$, produced by Hokuriku Kasei Industry Co., Ltd.) and 10.82 g of colloidal silica ("Ludox AS-40" (trade name), solid concentration: 40% by mass, produced by W. R. Grace & Co.-Conn.) were mixed, and stirred for 30 minutes, thereby preparing a mixed gel. The composition of the mixed gel was as follows: $\alpha$ = E/Al$_2$O$_3$ = 4.86, $\beta$ = SiO$_2$/Al$_2$O$_3$ = 8.17, $\gamma$ = Na$_2$O/Al$_2$O$_3$ = 3.99, $\delta$ = P$_2$O$_5$/Al$_2$O$_3$ = 0.00, $\varepsilon$ = H$_2$O/Al$_2$O$_3$ = 431.2, $\zeta$ = H$_2$O/OH$^-$ = 527.8, and $\eta$ = R/Al$_2$O$_3$ = 0.00. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.05 N potassium carbonate solution adjusted with potassium carbonate ($K_2CO_3$, produced by Nippon Soda Co., Ltd.), and stirred at room temperature and 500 rpm for 3 hours. A product was subjected to filtration and dried at 120°C, and thus a powdered zeolite where the cation was partially exchanged with potassium was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

The silica/alumina ratio was calculated from a $^{29}Si$-MAS-NMR spectrum of the resulting zeolite, and as a result, SAR was 6.90 and (a + d)/(b + c) = 0.220 was satisfied. The contents of potassium and lithium in the zeolite satisfied Z/T = 0.98 (= K/T). The adsorption isotherm and the desorption isotherm of $CO_2$ were measured, thus the amount of adsorption at 760 mmHg was 84.0 $cm^3/g$ and q(Ad)/q(De) was 1.000. The adsorption isotherm of $CH_4$ was measured in the same manner, and thus the amount of adsorption at 760 mmHg was 0.0 $cm^3/g$.

[Production Example 3]

141.41 g of water, 2.62 g of sodium hydroxide (NaOH, produced by FUJIFILM Wako Pure Chemical Corporation), 8.53 g of sodium nitrate ($NaNO_3$, produced by FUJIFILM Wako Pure Chemical Corporation), 3.85 g of sodium aluminate ($NaAlO_2$, produced by FUJIFILM Wako Pure Chemical Corporation) and 17.41 g of amorphous silica (Perkasil SM500, produced by W. R. Grace & Co.-Conn.) were mixed, and stirred for 1 hour, thereby preparing a mixed gel. The composition of the mixed gel was as follows: $\alpha$ = E/Al$_2$O$_3$ = 4.85, $\beta$ = SiO$_2$/Al$_2$O$_3$ = 14.00, $\gamma$ = Na$_2$O/Al$_2$O$_3$ = 5.16, $\delta$ = P$_2$O$_5$/Al$_2$O$_3$ = 0.00, $\varepsilon$ = H$_2$O/Al$_2$O$_3$ = 379.3, $\zeta$ = H$_2$O/OH$^-$ = 120.0, and $\eta$ = R/Al$_2$O$_3$ = 0.00. The mixed gel was loaded to a 300-mL stainless micro-bomb (manufactured by HIRO COMPANY) with a fluororesin inner cylinder placed, and subjected to hydrothermal synthesis at a stirring speed of 30 rpm at 130°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

The silica/alumina ratio was calculated from a $^{29}Si$-MAS-NMR spectrum of the resulting zeolite, and as a result, SAR was 10.1 and (a + d)/(b + c) = 0.519 was satisfied. In addition, the contents of potassium and lithium in the zeolite satisfied Z/T = 0.00 (= K/T). The adsorption isotherm and the desorption isotherm of $CO_2$ were measured, thus the amount of adsorption at 760 mmHg was 80.0 $cm^3/g$ and q(Ad)/q(De) was 1.000. The adsorption isotherm of $CH_4$ was measured in the same manner, and thus the amount of adsorption at 760 mmHg was 7.2 $cm^3/g$.

[Production Example 4]

141.41 g of water, 2.62 g of sodium hydroxide (NaOH, produced by Wako Pure Chemical Industries, Ltd.), 2.43 g of sodium nitrate ($NaNO_3$, produced by FUJIFILM Wako Pure Chemical Corporation), 0.55 g of sodium aluminate ($NaAlO_2$, produced by FUJIFILM Wako Pure Chemical Corporation) and 35.33 g of aluminosilicate (SIPERNAT 820A, produced by Evonik Industries) were mixed, and stirred for 1 hour, thereby preparing a mixed gel. The composition of the mixed gel was as follows: $\alpha$ = E/Al$_2$O$_3$ = 0.88, $\beta$ = SiO$_2$/Al$_2$O$_3$ = 14.00, $\gamma$ = Na$_2$O/Al$_2$O$_3$ = 2.62, $\delta$ = P$_2$O$_5$/Al$_2$O$_3$ = 0.00, $\varepsilon$ = H$_2$O/Al$_2$O$_3$ = 242.4, $\zeta$ = H$_2$O/OH$^-$ = 120.0, and $\eta$ = R/Al$_2$O$_3$ = 0.00. The mixed gel was loaded to a 300-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.005 N potassium carbonate solution adjusted with potassium carbonate ($K_2CO_3$, produced by Nippon Soda Co., Ltd.), and stirred at room temperature and 500 rpm for 3 hours. A product was subjected to filtration and dried at 120°C, and thus a powdered zeolite where the cation was partially exchanged with potassium was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

The silica/alumina ratio was calculated from a $^{29}Si$-MAS-NMR spectrum of the resulting zeolite, and as a result, SAR was 8.20 and (a + d)/(b + c) = 0.356 was satisfied. In addition, the contents of potassium and lithium in the zeolite satisfied Z/T = 0.16 (= K/T). The adsorption isotherm and the desorption isotherm of $CO_2$ were measured, thus the amount of adsorption at 760 mmHg was 72.7 $cm^3/g$ and q(Ad)/q(De) was 0.991. The adsorption isotherm of $CH_4$ was measured in the same manner, and thus the amount of adsorption at 760 mmHg was 0.5 $cm^3/g$.

[Production Example 5]

21.05 g of water, 0.53 g of sodium hydroxide (NaOH, produced by Junsei Chemical Co., Ltd.), 1.37 g of sodium nitrate (NaNO$_3$, produced by FUJIFILM Wako Pure Chemical Corporation), 1.13 g of sodium aluminate (NaAlO$_2$, produced by FUJIFILM Wako Pure Chemical Corporation) and 15.5 g of liquid glass No. 3 (produced by Kishida Chemical Co., Ltd.) were mixed, and stirred for 1 hour, thereby preparing a mixed gel. The composition of the mixed gel was as follows: $\alpha$ = E/Al$_2$O$_3$ = 2.66, $\beta$ = SiO$_2$/Al$_2$O$_3$ = 12.39, $\gamma$ = Na$_2$O/Al$_2$O$_3$ = 6.10, $\delta$ = P$_2$O$_5$/Al$_2$O$_3$ = 0.00, $\varepsilon$ = H$_2$O/Al$_2$O$_3$ = 197.9, $\zeta$ = H$_2$O/OH$^-$ = 90.2, and $\eta$ = R/Al$_2$O$_3$ = 0.00. The mixed gel was loaded to a 100-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.006 N lithium carbonate solution adjusted with lithium nitrate (LiNO$_3$, produced by FUJIFILM Corporation), and stirred at room temperature and 500 rpm for 3 hours. A product was subjected to filtration and dried at 120°C, and thus a powdered zeolite where the cation was partially exchanged with lithium was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

The silica/alumina ratio was calculated from a $^{29}$Si-MAS-NMR spectrum of the resulting zeolite, and as a result, SAR was 3.40 and (a + d)/(b + c) = 0.192 was satisfied. In addition, the contents of potassium and lithium in the zeolite satisfied Z/T = 0.11. The adsorption isotherm and the desorption isotherm of CO$_2$ were measured, thus the amount of adsorption at 760 mmHg was 51.2 cm$^3$/g and q(Ad)/q(De) was 0.978. The adsorption isotherm of CH$_4$ was measured in the same manner, and thus the amount of adsorption at 760 mmHg was 0.8 cm$^3$/g.

[Example 1]

40 parts by mass of the GIS-type zeolite powder obtained in Production Example 1, 43 parts by mass of powder alumina hydrate (produced by JGC Catalysts and Chemicals Ltd., content rate of alumina: 70% by mass), and 17 parts by mass of ion-exchange water were mixed.

The mixture was extruded into a cylindrical form having a diameter of 3 mm, with a wet extrusion granulator "MG-55" (manufactured by Dalton Corporation), and then calcined with an electric furnace under an air atmosphere at 350°C for 24 hours.

Various evaluations of the zeolite formed body thus obtained were performed, and shown in Table 1.

The apparent density d$_a$ was 1.4 g/cm$^3$, the bulk density d$_b$ was 0.882 g/cm$^3$, the true density dt was 2.48 g/cm3, the apparent density d$_a$/true density dt was 0.56, and the bulk density d$_b$/true density dt was 0.36. In addition, the degree of weight reduction was 0.02 g.

Embrittlement resistance evaluation of the zeolite formed body under a CO$_2$ atmosphere was performed to measure the powdering rate, and thus the powdering rate was 0% by mass. The powdering rate after exposure to high temperature was 0% by mass.

The adsorption isotherms of CO$_2$, CH$_4$ and N$_2$ of the zeolite formed body were measured, thus the amounts of adsorption at 760 mmHg were respectively CO$_2$: 46.9 cm$^3$/g, CH$_4$: 3.5 cm$^3$/g, and N$_2$: 4.0 cm$^3$/g, the adsorption selectivity of CO$_2$/CH$_4$ was 13.4, and the adsorption selectivity of CO$_2$/N$_2$ was 11.7. The recovery purity of CO$_2$ was 98.5% by volume and the recovery rate of CH$_4$ was 99.0% by volume, as measured with the gas separation performance evaluation system, and the pressure loss at a packing height of 1 m was 10.8 kPa.

[Example 2]

The zeolite synthesized in Production Example 2 was used to obtain a zeolite formed body by the same method as in Example 1.

In the zeolite formed body thus obtained, the apparent density d$_a$ was 1.4 g/cm$^3$, the bulk density d$_b$ was 0.882 g/cm$^3$, the true density dt was 2.48 g/cm$^3$, the apparent density d$_a$/true density dt was 0.56, and the bulk density d$_b$/true density dt was 0.36. In addition, the degree of weight reduction was 0.02 g.

Embrittlement resistance evaluation of the zeolite formed body under a CO$_2$ atmosphere was performed to measure the powdering rate, and thus the powdering rate was 2% by mass. The powdering rate after exposure to high temperature was 1% by mass.

The adsorption isotherms of CO$_2$, CH$_4$ and N$_2$ of the zeolite formed body were measured, thus the amounts of adsorption at 760 mmHg were respectively CO$_2$: 48.0 cm$^3$/g, CH$_4$: 0.9 cm$^3$/g, and N$_2$: 1.3 cm$^3$/g, the adsorption selectivity of CO$_2$/CH$_4$ was 53.3, and the adsorption selectivity of CO$_2$/N$_2$ was 36.9.

The recovery purity of CO$_2$ was 98.5% by volume and the recovery rate of CH$_4$ was 99.0% by volume, as measured with the gas separation performance evaluation system. The pressure loss at a packing height of 1 m was measured, and thus was 10.6 kPa.

[Example 3]

The zeolite synthesized in Production Example 3 was used to obtain a zeolite formed body by the same method as in Example 1.
In the zeolite formed body thus obtained, the apparent density $d_a$ was 1.4 g/cm$^3$, the bulk density $d_b$ was 0.882 g/cm$^3$, the true density dt was 2.48 g/cm$^3$, the apparent density $d_a$/true density dt was 0.56, and the bulk density $d_b$/true density dt was 0.36. In addition, the degree of weight reduction was 0.02 g.
Embrittlement resistance evaluation of the zeolite formed body under a $CO_2$ atmosphere was performed to measure the powdering rate, and thus the powdering rate was 2% by mass. The powdering rate after exposure to high temperature was 1% by mass.
The adsorption isotherms of $CO_2$, $CH_4$ and $N_2$ of the zeolite formed body were measured, thus the amounts of adsorption at 760 mmHg were respectively $CO_2$: 46.2 cm$^3$/g, $CH_4$: 4.1 cm$^3$/g, and $N_2$: 4.5 cm$^3$/g, the adsorption selectivity of $CO_2$/$CH_4$ was 11.3, and the adsorption selectivity of $CO_2$/$N_2$ was 10.3.
The recovery purity of $CO_2$ was 98.5% by volume and the recovery rate of $CH_4$ was 99.0% by volume, as measured with the gas separation performance evaluation system. The pressure loss at a packing height of 1 m was measured, and thus was 10.9 kPa.

[Example 4]

A zeolite formed body was obtained in the same manner as in Example 1 except that 40 parts by mass of the GIS-type zeolite powder obtained in Production Example 1, 10.4 parts by mass of powder alumina hydrate (produced by JGC Catalysts and Chemicals Ltd., content rate of alumina: 70% by mass), 1.2 parts by mass of methyl cellulose (Serander YB-132A produced by HighChem Co., Ltd.), 0.2 parts by mass of polyvinyl alcohol (Gohsenol N-300 produced by Mitsubishi Chemical Corporation), and 48.2 parts by mass of alumina sol (produced by Nissan Chemical Corporation, content rate of alumina: 10.5% by mass) were mixed and the mixture was molded with a wet extrusion granulator.
In the zeolite formed body thus obtained, the apparent density $d_a$ was 1.3 g/cm$^3$, the bulk density $d_b$ was 0.819 g/cm$^3$, the true density dt was 2.31 g/cm$^3$, the apparent density $d_a$/true density dt was 0.56, and the bulk density $d_b$/true density dt was 0.35. In addition, the degree of weight reduction was 0.02 g.
Embrittlement resistance evaluation of the zeolite formed body under a $CO_2$ atmosphere was performed to measure the powdering rate, and thus the powdering rate was 2% by mass. The powdering rate after exposure to high temperature was 1% by mass.
The adsorption isotherms of $CO_2$ and $CH_4$ of the zeolite formed body of Example 4 were measured, thus the amounts of adsorption at 760 mmHg were respectively $CO_2$: 62.6 cm$^3$/g and $CH_4$: 4.9 cm$^3$/g, and the adsorption selectivity of $CO_2$/$CH_4$ was 12.8.
The recovery purity of $CO_2$ was 98.3% by volume and the recovery rate of $CH_4$ was 98.8% by volume, as measured with the gas separation performance evaluation system. The pressure loss at a packing height of 1 m was measured, and thus was 10.8 kPa.

[Example 5]

The zeolite synthesized in Production Example 4 was used to obtain a zeolite formed body by the same method as in Example 1.
In the zeolite formed body thus obtained, the apparent density $d_a$ was 1.3 g/cm$^3$, the bulk density $d_b$ was 0.819 g/cm$^3$, the true density dt was 2.48 g/cm$^3$, the apparent density $d_a$/true density dt was 0.52, and the bulk density $d_b$/true density dt was 0.33. In addition, the degree of weight reduction was 0.02 g.
Embrittlement resistance evaluation of the zeolite formed body under a $CO_2$ atmosphere was performed to measure the powdering rate, and thus the powdering rate was 2% by mass. The powdering rate after exposure to high temperature was 1% by mass.
The adsorption isotherms of $CO_2$, $CH_4$ and $N_2$ of the zeolite formed body were measured, thus the amounts of adsorption at 760 mmHg were respectively $CO_2$: 41.6 cm$^3$/g, $CH_4$: 1.2 cm$^3$/g, and $N_2$: 1.5 cm$^3$/g, the adsorption selectivity of $CO_2$/$CH_4$ was 34.7, and the adsorption selectivity of $CO_2$/$N_2$ was 27.7.
The recovery purity of $CO_2$ was 98.3% by volume and the recovery rate of $CH_4$ was 98.8% by volume, as measured with the gas separation performance evaluation system. The pressure loss at a packing height of 1 m was measured, and thus was 10.6 kPa.

[Example 6]

The zeolite synthesized in Production Example 5 was used to obtain a zeolite formed body by the same method as in Example 1.

In the zeolite formed body thus obtained, the apparent density $d_a$ was 1.3 g/cm$^3$, the bulk density $d_b$ was 0.819 g/cm$^3$, the true density dt was 2.48 g/cm$^3$, the apparent density $d_a$/true density dt was 0.52, and the bulk density $d_a$/true density dt was 0.33. In addition, the degree of weight reduction was 0.02 g.

Embrittlement resistance evaluation of the zeolite formed body under a $CO_2$ atmosphere was performed to measure the powdering rate, and thus the powdering rate was 2% by mass. The powdering rate after exposure to high temperature was 1% by mass.

The adsorption isotherms of $CO_2$, $CH_4$ and $N_2$ of the zeolite formed body were measured, thus the amounts of adsorption at 760 mmHg were respectively $CO_2$: 29.3 cm$^3$/g, $CH_4$: 1.4 cm$^3$/g, and $N_2$: 1.8 cm$^3$/g, the adsorption selectivity of $CO_2$/$CH_4$ was 20.9, and the adsorption selectivity of $CO_2$/$N_2$ was 16.2.

The recovery purity of $CO_2$ was 98.3% by volume and the recovery rate of $CH_4$ was 98.8% by volume, as measured with the gas separation performance evaluation system. The pressure loss at a packing height of 1 m was measured, and thus was 10.9 kPa.

[Example 7]

A zeolite formed body was obtained in the same manner as in Example 4 except that 49.4 parts by mass of alumina sol having a content of alumina of 7.2% by mass (produced by Taki Chemical Co., Ltd.) was used instead of the alumina sol having a content rate of alumina of 10.5% by mass, and the amount of the powder alumina hydrate was 9.2 parts by mass.

In the zeolite formed body thus obtained, the apparent density $d_a$ was 0.92 g/cm$^3$, the bulk density $d_b$ was 0.580 g/cm$^3$, the true density dt was 2.31 g/cm$^3$, the apparent density $d_a$/true density dt was 0.40, and the bulk density $d_b$/true density dt was 0.25. In addition, the degree of weight reduction was 0.02 g.

Embrittlement resistance evaluation of the zeolite formed body under a $CO_2$ atmosphere was performed to measure the powdering rate, and thus the powdering rate was 5% by mass. The powdering rate after exposure to high temperature was 3% by mass.

The adsorption isotherms of $CO_2$ and $CH_4$ of the zeolite formed body were measured, thus the amounts of adsorption at 760 mmHg were respectively $CO_2$: 65.8 cm$^3$/g and $CH_4$: 5.0 cm$^3$/g, and the adsorption selectivity of $CO_2$/$CH_4$ was 13.2.

The recovery purity of $CO_2$ was 96.9% by volume and the recovery rate of $CH_4$ was 97.9% by volume, as measured with the gas separation performance evaluation system. The pressure loss at a packing height of 1 m was measured, and thus was 10.5 kPa.

[Example 8]

A zeolite formed body was obtained in the same manner as in Example 4 except that no polyvinyl alcohol was used.

In the zeolite formed body thus obtained, the apparent density $d_a$ was 0.91 g/cm$^3$, the bulk density $d_b$ was 0.573 g/cm$^3$, the true density dt was 2.31 g/cm$^3$, the apparent density $d_a$/true density dt was 0.39, and the bulk density $d_b$/true density dt was 0.25. In addition, the degree of weight reduction was 0.03 g.

Embrittlement resistance evaluation of the zeolite formed body under a $CO_2$ atmosphere was performed to measure the powdering rate, and thus the powdering rate was 8% by mass. The powdering rate after exposure to high temperature was 7% by mass.

The adsorption isotherms of $CO_2$ and $CH_4$ of the zeolite formed body were measured, thus the amounts of adsorption at 760 mmHg were respectively $CO_2$: 62.5 cm$^3$/g and $CH_4$: 4.8 cm$^3$/g, and the adsorption selectivity of $CO_2$/$CH_4$ was 13.0.

The recovery purity of $CO_2$ was 96.9% by volume and the recovery rate of $CH_4$ was 97.9% by volume, as measured with the gas separation performance evaluation system. The pressure loss at a packing height of 1 m was measured, and thus was 10.8 kPa.

[Example 9]

A formed body was obtained in the same manner as in Example 4 except that no methyl cellulose was used.

In the zeolite formed body thus obtained, the apparent density $d_a$ was 1.0 g/cm$^3$, the bulk density was $d_b$0.630 g/cm$^3$, the true density dt was 2.31 g/cm$^3$, the apparent density $d_a$/true density dt was 0.43, and the bulk density $d_a$/true

density dt was 0.27. In addition, the degree of weight reduction was 0.1 g.

Embrittlement resistance evaluation of the zeolite formed body under a $CO_2$ atmosphere was performed to measure the powdering rate, and thus the powdering rate was 6% by mass. The powdering rate after exposure to high temperature was 6% by mass.

The adsorption isotherms of $CO_2$ and $CH_4$ of the zeolite formed body were measured, thus the amounts of adsorption at 760 mmHg were respectively $CO_2$: 62.5 cm$^3$/g and $CH_4$: 4.7 cm$^3$/g, and the adsorption selectivity of $CO_2$/$CH_4$ was 13.3.

The recovery purity of $CO_2$ was 97.3% by volume and the recovery rate of $CH_4$ was 98.1% by volume, as measured with the gas separation performance evaluation system. The pressure loss at a packing height of 1 m was measured, and thus was 10.9 kPa.

[Example 10]

A zeolite formed body was obtained in the same manner as in Example 4 except that extrusion was manually performed with a clay gun instead of the wet extrusion granulator "MG-55".

In the zeolite formed body thus obtained, the apparent density $d_a$ was 0.77 g/cm$^3$, the bulk density $d_b$ was 0.485 g/cm$^3$, the true density dt was 2.31 g/cm$^3$, the apparent density $d_a$/true density dt was 0.33, and the bulk density $d_a$/true density dt was 0.21. In addition, the degree of weight reduction was 0.04 g.

Embrittlement resistance evaluation of the zeolite formed body under a $CO_2$ atmosphere was performed to measure the powdering rate, and thus the powdering rate was 10% by mass. The powdering rate after exposure to high temperature was 8% by mass.

The adsorption isotherms of $CO_2$ and $CH_4$ of the zeolite formed body were measured, thus the amounts of adsorption at 760 mmHg were respectively $CO_2$: 62.6 cm$^3$/g and $CH_4$: 4.8 cm$^3$/g, and the adsorption selectivity of $CO_2$/$CH_4$ was 13.0.

The recovery purity of $CO_2$ was 96.1% by volume and the recovery rate of $CH_4$ was 97.3% by volume, as measured with the gas separation performance evaluation system. The pressure loss at a packing height of 1 m was measured, and thus was 10.7 kPa.

[Example 11]

A formed body was obtained in the same manner as in Example 4 except that alumina sol produced by Kawaken Fine Chemicals Co., Ltd. (content rate of alumina: 10% by mass) was used instead of the alumina sol produced by Nissan Chemical Corporation.

In the zeolite formed body thus obtained, the apparent density $d_a$ was 0.77 g/cm$^3$, the bulk density $d_b$ was 0.485 g/cm$^3$, the true density dt was 2.31 g/cm$^3$, the apparent density $d_a$/true density dt was 0.33, and the bulk density $d_b$/true density dt was 0.21. In addition, the degree of weight reduction was 0.03 g.

Embrittlement resistance evaluation of the zeolite formed body under a $CO_2$ atmosphere was performed to measure the powdering rate, and thus the powdering rate was 10% by mass. The powdering rate after exposure to high temperature was 8% by mass.

The adsorption isotherms of $CO_2$ and $CH_4$ of the zeolite formed body were measured, thus the amounts of adsorption at 760 mmHg were respectively $CO_2$: 62.4 cm$^3$/g and $CH_4$: 4.8 cm$^3$/g, and the adsorption selectivity of $CO_2$/$CH_4$ was 13.0.

The recovery purity of $CO_2$ was 96.1% by volume and the recovery rate of $CH_4$ was 97.3% by volume, as measured with the gas separation performance evaluation system. The pressure loss at a packing height of 1 m was measured, and thus was 10.8 kPa.

[Example 12]

A formed body was obtained in the same manner as in Example 4 except that pressure treatment at 12 MPa for 20 seconds was performed with a tablet molding compressor "BRE-32" (manufactured by Maekawa Testing Machine MFG. Co., LTD.) instead of the wet extrusion granulator "MG-55", to provide a disc-shaped formed body having a diameter of 32 mm and a thickness of 5 mm.

In the zeolite formed body thus obtained, the apparent density $d_a$ was 1.4 g/cm$^3$, the bulk density $d_b$ was 1.092 g/cm$^3$, the true density dt was 2.31 g/cm$^3$, the apparent density $d_a$/true density dt was 0.61, and the bulk density $d_a$/true density dt was 0.47. In addition, the degree of weight reduction was 0.01 g.

Embrittlement resistance evaluation of the zeolite formed body under a $CO_2$ atmosphere was performed to measure the powdering rate, and thus the powdering rate was 0% by mass. The powdering rate after exposure to high temperature was 0% by mass.

The adsorption isotherms of $CO_2$ and $CH_4$ of the zeolite formed body were measured, thus the amounts of adsorption at 760 mmHg were respectively $CO_2$: 62.4 $cm^3/g$ and $CH_4$: 4.9 $cm^3/g$, and the adsorption selectivity of $CO_2/CH_4$ was 12.7.

The recovery purity of $CO_2$ was 99.1% by volume and the recovery rate of $CH_4$ was 99.4% by volume, as measured with the gas separation performance evaluation system. The pressure loss at a packing height of 1 m was measured, and thus was 11.0 kPa.

[Example 13]

A formed body was obtained in the same manner as in Example 7 except that, after extrusion to a diameter of 8 mm instead of a diameter of 3 mm, granulating treatment with Marumerizer (manufactured by Dalton Corporation) was performed at 200 rpm for 10 minutes to provide a spherical formed body having a diameter of 8 mm.

In the zeolite formed body thus obtained, the apparent density $d_a$ was 1.2 $g/cm^3$, the bulk density $d_b$ was 0.744 $g/cm3$, the true density was 2.31 $g/cm3$, the apparent density/true density was 0.52, and the bulk density $d_b$/true density dt was 0.32. In addition, the degree of weight reduction was 0.03 g.

Embrittlement resistance evaluation of the zeolite formed body under a $CO_2$ atmosphere was performed to measure the powdering rate, and thus the powdering rate was 2% by mass. The powdering rate after exposure to high temperature was 2% by mass.

The adsorption isotherms of $CO_2$ and $CH_4$ of the zeolite formed body were measured, thus the amounts of adsorption at 760 mmHg were respectively $CO_2$: 62.6 $cm^3/g$ and $CH_4$: 4.9 $cm^3/g$, and the adsorption selectivity of $CO_2/CH_4$ was 12.8.

The recovery purity of $CO_2$ was 97.9% by volume and the recovery rate of $CH_4$ was 98.6% by volume, as measured with the gas separation performance evaluation system. The pressure loss at a packing height of 1 m was measured, and thus was 3.06 kPa.

[Example 14]

40 parts by mass of the GIS-type zeolite powder obtained in Production Example 1, 10 parts by mass of bentonite (produced by Kunimine Industries Co., Ltd.), 0.4 parts by mass of carboxymethyl cellulose (produced by Nippon Paper Industries Co., Ltd.), and 40.6 parts by mass of ion-exchange water were mixed.

The mixture was extruded into a cylindrical form having a diameter of 3 mm, with a wet extrusion granulator MG-55 (manufactured by Dalton Corporation), and then calcined with an electric furnace under an air atmosphere at 600°C for 10 hours.

In the zeolite formed body thus obtained, the apparent density $d_a$ was 0.97 $g/cm^3$, the bulk density $d_b$ was 0.631 $g/cm^3$, the true density dt was 2.40 $g/cm^3$, the apparent density $d_a$/true density dt was 0.40, and the bulk density $d_a$/true density dt was 0.26. In addition, the degree of weight reduction was 0.03 g.

Embrittlement resistance evaluation of the zeolite formed body under a $CO_2$ atmosphere was performed to measure the powdering rate, and thus the powdering rate was 0% by mass. The powdering rate after exposure to high temperature was 0% by mass.

The adsorption isotherms of $CO_2$ and $CH_4$ of the zeolite formed body were measured, thus the amounts of adsorption at 760 mmHg were respectively $CO_2$: 65.6 $cm^3/g$ and $CH_4$: 5.02 $cm^3/g$, and the adsorption selectivity of $CO_2/CH_4$ was 13.1.

The recovery purity of $CO_2$ was 98.1% by volume and the recovery rate of $CH_4$ was 97.3% by volume, as measured with the gas separation performance evaluation system. The pressure loss at a packing height of 1 m was measured, and thus was 10.9 kPa.

[Example 15]

A formed body was obtained in the same manner as in Example 14 except that, after extrusion to a diameter of 8 mm instead of a diameter of 3 mm, granulating treatment with Marumerizer (manufactured by Dalton Corporation) was performed at 200 rpm for 10 minutes to provide a spherical formed body having a diameter of 8 mm.

In the zeolite formed body thus obtained, the apparent density $d_a$ was 1.1 $g/cm^3$, the bulk density $d_b$ was 0.693 $g/cm^3$, the true density dt was 2.40 $g/cm^3$, the apparent density $d_a$/true density dt was 0.46, and the bulk density $d_a$/true density dt was 0.29. In addition, the degree of weight reduction was 0.03 g.

Embrittlement resistance evaluation of the zeolite formed body under a $CO_2$ atmosphere was performed to measure the powdering rate, and thus the powdering rate was 0% by mass. The powdering rate after exposure to high temperature was 0% by mass.

The adsorption isotherms of $CO_2$ and $CH_4$ of the zeolite formed body were measured, thus the amounts of adsorption at 760 mmHg were respectively $CO_2$: 65.9 $cm^3$/g and $CH_4$: 5.00 $cm^3$/g, and the adsorption selectivity of $CO_2$/$CH_4$ was 13.2.

The recovery purity of $CO_2$ was 97.6% by volume and the recovery rate of $CH_4$ was 98.4% by volume, as measured with the gas separation performance evaluation system. The pressure loss at a packing height of 1 m was measured, and thus was 3.10 kPa.

[Comparative Example 1]

A starting material slurry was obtained by dispersing 49.5 parts by mass of the GIS-type zeolite powder obtained in Production Example 1, in 50.5 parts by mass of ion-exchange water. The starting material slurry obtained was stirred at 25°C for 1 hour. The starting material slurry was supplied to a spray drying machine (OC-16 type spray dryer manufactured by Ohkawara Kakohki Co., Ltd.) in which the fluid temperature at an inlet of the spray drying machine was set to 230°C and the fluid temperature at an outlet of the spray drying machine was set to 120°C, and was spray-dried with a rotating disc system, thereby providing a spray-dried powder. A formed body was obtained in the same manner as in Example 4 except that the spray-dried powder was used instead of the GIS-type zeolite of Production Example 1.

In the zeolite formed body thus obtained, the apparent density $d_a$ was 0.70 $g/cm^3$, the bulk density $d_b$ was 0.441 $g/cm^3$, the true density dt was 2.31 $g/cm^3$, the apparent density $d_a$/true density dt was 0.30, and the bulk density $d_b$/true density dt was 0.19. In addition, the degree of weight reduction was 0.09 g.

Embrittlement resistance evaluation of the zeolite formed body under a $CO_2$ atmosphere was performed to measure the powdering rate, and thus the powdering rate was 90% by mass. The powdering rate after exposure to high temperature was 95% by mass.

The adsorption isotherms of $CO_2$ and $CH_4$ of the zeolite formed body of Comparative Example 1 were measured, thus the amounts of adsorption at 760 mmHg were respectively $CO_2$: 62.5 $cm^3$/g and $CH_4$: 4.8 $cm^3$/g, and the adsorption selectivity of $CO_2$/$CH_4$ was 13.0.

The recovery purity of $CO_2$ was 95.6% by volume and the recovery rate of $CH_4$ was 96.9% by volume, as measured with the gas separation performance evaluation system. The pressure loss at a packing height of 1 m was measured, and thus was 11.0 kPa.

[Comparative Example 2]

A formed body was obtained in the same manner as in Comparative Example 1 except that neither methyl cellulose, nor polyvinyl alcohol was used.

In the zeolite formed body thus obtained, the apparent density $d_a$ was 0.74 $g/cm^3$, the bulk density $d_b$ was 0.466 $g/cm^3$, the true density dt was 2.31 $g/cm^3$, the apparent density $d_a$/true density dt was 0.32, and the bulk density $d_a$/true density dt was 0.20. In addition, the degree of weight reduction was 0.03 g.

Embrittlement resistance evaluation of the zeolite formed body under a $CO_2$ atmosphere was performed to measure the powdering rate, and thus the powdering rate was 100% by mass. The powdering rate after exposure to high temperature was 100% by mass.

The adsorption isotherms of $CO_2$ and $CH_4$ of the zeolite formed body were measured, thus the amounts of adsorption at 760 mmHg were respectively $CO_2$: 62.6 $cm^3$/g and $CH_4$: 4.9 $cm^3$/g, and the adsorption selectivity of $CO_2$/$CH_4$ was 12.8.

The recovery purity of $CO_2$ was 95.9% by volume and the recovery rate of $CH_4$ was 97.1% by volume, as measured with the gas separation performance evaluation system. The pressure loss at a packing height of 1 m was measured, and thus was 10.9 kPa.

[Comparative Example 3]

70 parts by mass of the GIS-type zeolite powder obtained in Production Example 1 and 30 parts by mass of a polyamide resin (Zytel 101L produced by Du Pont) were melt-kneaded with a twin screw extruder (TEM48-SS manufactured by Toshiba Machine Co., Ltd.) at 285°C and 400 rpm, thereby providing a composite. The resulting composite was subjected to an injection molding machine (EC75 NII manufactured by Toshiba Machine Co., Ltd.) set at a temperature of 285°C and a mold temperature of 70°C, thereby providing a zeolite formed body having a length of 80 mm, a width of 10 mm, and a thickness of 4 mm.

In the zeolite formed body thus obtained, the apparent density $d_a$ was 0.74 $g/cm^3$, the bulk density $d_b$ was 0.385 $g/cm^3$, the true density dt was 2.31 $g/cm^3$, the apparent density $d_a$/true density dt was 0.32, and the bulk density $d_b$/true density dt was 0.17. In addition, the degree of weight reduction was 0.65 g.

Embrittlement resistance evaluation of the zeolite formed body under a $CO_2$ atmosphere was performed to measure the powdering rate, and thus the powdering rate was 12% by mass. The powdering rate after exposure to high temperature was 100% by mass.

The adsorption isotherms of $CO_2$ and $CH_4$ of the zeolite formed body of Comparative Example 3 were measured, thus the amounts of adsorption at 760 mmHg were respectively $CO_2$: 57.5 $cm^3$/g and $CH_4$: 4.5 $cm^3$/g, and the adsorption selectivity of $CO_2/CH_4$ was 12.8.

The recovery purity of $CO_2$ was 94.8% by volume and the recovery rate of $CH_4$ was 96.3% by volume, as measured with the gas separation performance evaluation system. The pressure loss at a packing height of 1 m was measured, and thus was 6.29 kPa.

[Comparative Example 4]

10 parts by mass of a $\gamma$-alumina powder (produced by Kanto Kagaku) was mixed with 90 parts by mass of the GIS-type zeolite powder obtained in Production Example 1, and molded with a tablet molding machine (manufactured by Labonect Co., Ltd.), thereby providing a tablet-molded product having a diameter of 3 mm and a height of 2 mm. The tablet-molded product was heated at 335°C for 4 hours, thereby providing a zeolite formed body.

In the zeolite formed body thus obtained, the apparent density $d_a$ was 0.70 $g/cm^3$, the bulk density $d_b$ was 0.455 $g/cm^3$, the true density dt was 2.42 $g/cm^3$, the apparent density $d_a$/true density dt was 0.29, and the bulk density $d_a$/true density dt was 0.19. In addition, the degree of weight reduction was 0.03 g.

Embrittlement resistance evaluation of the zeolite formed body under a $CO_2$ atmosphere was performed to measure the powdering rate, and thus the powdering rate was 100% by mass. The powdering rate after exposure to high temperature was 100% by mass.

The adsorption isotherms of $CO_2$ and $CH_4$ of the zeolite formed body were measured, thus the amounts of adsorption at 760 mmHg were respectively $CO_2$: 74.0 $cm^3$/g and $CH_4$: 5.6 $cm^3$/g, and the adsorption selectivity of $CO_2/CH_4$ was 13.2.

The recovery purity of $CO_2$ was 95.7% by volume and the recovery rate of $CH_4$ was 97.0% by volume, as measured with the gas separation performance evaluation system. The pressure loss at a packing height of 1 m was measured, and thus was 18.5 kPa.

The above results are collectively shown in Table 1.

Table 1 (1/4)

| | | Example 1 | Example 2 | Example 3 | Example 4 | Example 5 |
|---|---|---|---|---|---|---|
| GIS zeolite | | Production Example 1 | Production Example 2 | Production Example 3 | Production Example 1 | Production Example 4 |
| Shape of formed body | | Cylinder | Cylinder | Cylinder | Cylinder | Cylinder |
| Apparent density $d_a$ | $g/cm^3$ | 1.4 | 1.4 | 1.4 | 1.3 | 1.3 |
| Bulk density $d_b$ | $g/cm^3$ | 0.882 | 0.882 | 0.882 | 0.819 | 0.819 |
| True density dt | $g/cm^3$ | 2.48 | 2.48 | 2.48 | 2.31 | 2.48 |
| Apparent density $d_a$/True density dt | - | 0.56 | 0.56 | 0.56 | 0.56 | 0.52 |
| Bulk density $d_b$/True density dt | - | 0.36 | 0.36 | 0.36 | 0.35 | 0.33 |

(continued)

|  |  | | Example 1 | Example 2 | Example 3 | Example 4 | Example 5 |
|---|---|---|---|---|---|---|---|
| GIS zeolite | | | Production Example 1 | Production Example 2 | Production Example 3 | Production Example 1 | Production Example 4 |
| Shape of formed body | | | Cylinder | Cylinder | Cylinder | Cylinder | Cylinder |
| Evaluation of adsorption iso-the rm | Amount of adsorption of $CO_2$ | cm3/g | 46.9 | 48.0 | 46.2 | 62.6 | 41.6 |
| | Amount of adsorption of $CH_4$ | cm3/g | 3.5 | 0.9 | 4.1 | 4.9 | 1.2 |
| | Amount of adsorption of $N_2$ | cm3/g | 4.0 | 1.3 | 4.5 | - | 1.5 |
| | Adsorption selectivity ($CO_2/CH_4$) | | 13.4 | 53.3 | 11.3 | 12.8 | 34.7 |
| | Adsorption selectivity ($CO_2/N_2$) | | 11.7 | 36.9 | 10.3 | - | 27.7 |
| Evaluation | Degree of weight reduction | - | 0.02 | 0.02 | 0.02 | 0.02 | 0.02 |
| | Powdering rate | % by mass | 0 | 2 | 2 | 2 | 2 |
| | Powdering rate after exposure to high temperature | % by mass | 0 | 1 | 1 | 1 | 1 |
| | Recovery purity $CO_2$ | % by volume | 98.5 | 98.5 | 98.5 | 98.3 | 98.3 |
| | Recovery rate $CH_4$ | % by volume | 99.0 | 99.0 | 99.0 | 98.8 | 98.8 |
| | Pressure loss | kPa | 10.8 | 10.6 | 10.9 | 10.8 | 10.6 |

Table 1 (2/4)

|  |  | Example 6 | Example 7 | Example 8 | Example 9 | Example 10 |
|---|---|---|---|---|---|---|
| GIS zeolite | | Production Example 5 | Production Example 1 | Production Example 1 | Production Example 1 | Production Example 1 |
| Shape of formed body | | Cylinder | Cylinder | Cylinder | Cylinder | Cylinder |
| Apparent density $d_a$ | g/cm$^3$ | 1.3 | 0.92 | 0.91 | 1.0 | 0.77 |
| Bulk density $d_b$ | g/cm$^3$ | 0.819 | 0.580 | 0.573 | 0.630 | 0.485 |
| True density dt | g/cm$^3$ | 2.48 | 2.31 | 2.31 | 2.31 | 2.31 |
| Apparent density $d_a$/True density dt | - | 0.52 | 0.40 | 0.39 | 0.43 | 0.33 |
| Bulk density $d_b$/True density dt | - | 0.33 | 0.25 | 0.25 | 0.27 | 0.21 |

(continued)

| | | | Example 6 | Example 7 | Example 8 | Example 9 | Example 10 |
|---|---|---|---|---|---|---|---|
| GIS zeolite | | | Production Example 5 | Production Example 1 | Production Example 1 | Production Example 1 | Production Example 1 |
| Shape of formed body | | | Cylinder | Cylinder | Cylinder | Cylinder | Cylinder |
| Evaluation of adsorption isotherm | Amount of adsorption of $CO_2$ | $cm^3$/g | 29.3 | 65.8 | 62.5 | 62.5 | 62.6 |
| | Amount of adsorption of $CH_4$ | $cm^3$/g | 1.4 | 5.0 | 4.8 | 4.7 | 4.8 |
| | Amount of adsorption of $N_2$ | $cm^3$/g | 1.8 | - | - | - | - |
| | Adsorption selectivity ($CO_2$/$CH_4$) | | 20.9 | 13.2 | 13.0 | 13.3 | 13.0 |
| | Adsorption selectivity ($CO_2$/$N_2$) | | 16.3 | - | - | - | - |
| Evaluation | Degree of weight reduction | - | 0.02 | 0.02 | 0.03 | 0.1 | 0.04 |
| | Powdering rate | % by mass | 2 | 5 | 8 | 6 | 10 |
| | Powdering rate after exposure to high temperature | % by mass | 1 | 3 | 7 | 6 | 8 |
| | Recovery purity $CO_2$ | % by volume | 98.3 | 969 | 96.9 | 97.3 | 96.1 |
| | Recovery rate $CH_4$ | % by volume | 98.8 | 97.9 | 97.9 | 98.1 | 97.3 |
| | Pressure loss | kPa | 10.9 | 10.5 | 10.8 | 10.9 | 10.7 |

Table 1 (3/4)

| | | Example 11 | Example 12 | Example 13 | Example 14 | Example 15 |
|---|---|---|---|---|---|---|
| GIS zeolite | | Production Example 1 | Production Example 1 | Production Example 1 | Production Example 1 | Production Example 1 |
| Shape of formed body | | Cylinder | Disc | Sphere | Cylinder | Sphere |
| Apparent density $d_a$ | g/$cm^3$ | 0.77 | 1.4 | 1.2 | 0.97 | 1.1 |
| Bulk density $d_b$ | g/$cm^3$ | 0.485 | 1.092 | 0.744 | 0.631 | 0.693 |
| True density dt | g/$cm^3$ | 2.31 | 2.31 | 2.31 | 2.40 | 2.40 |
| Apparent density $d_a$/ True density dt | - | 0.33 | 0.61 | 0.52 | 0.40 | 0.46 |
| Bulk density $d_b$/True density dt | - | 0.21 | 0.47 | 0.32 | 0.26 | 0.29 |

(continued)

|  |  |  | Example 11 | Example 12 | Example 13 | Example 14 | Example 15 |
|---|---|---|---|---|---|---|---|
| GIS zeolite |  |  | Production Example 1 | Production Example 1 | Production Example 1 | Production Example 1 | Production Example 1 |
| Shape of formed body |  |  | Cylinder | Disc | Sphere | Cylinder | Sphere |
| Evaluation of adsorption isotherm | Amount of adsorption of $CO_2$ | $cm^3/g$ | 62.4 | 62.4 | 62.6 | 65.6 | 65.9 |
|  | Amount of adsorption of $CH_4$ | $cm^3/g$ | 4.8 | 4.9 | 4.9 | 5.02 | 500 |
|  | Amount of adsorption of $N_2$ | $cm^3/g$ | - | - | - | - | - |
|  | Adsorption selectivity ($CO_2/CH_4$) |  | 13.0 | 12.7 | 12.8 | 13.1 | 13.2 |
|  | Adsorption selectivity ($CO_2/N_2$) |  | - | - | - | - | - |
| Evaluation | Degree of weight reduction | - | 0.03 | 0.01 | 0.03 | 0.03 | 0.03 |
|  | Powdering rate | % by mass | 10 | 0 | 2 | 0 | 0 |
|  | Powdering rate after exposure to high temperature | % by mass | 8 | 0 | 2 | 0 | 0 |
|  | Recovery purity $CO_2$ | % by volume | 96.1 | 99.1 | 97.9 | 98.1 | 97.6 |
|  | Recovery rate $CH_4$ | % by volume | 97.3 | 99.4 | 98.6 | 97.3 | 98.4 |
|  | Pressure loss | kPa | 10.8 | 11.0 | 3.06 | 10.9 | 3.10 |

Table 1 (4/4)

|  |  | Comparative Example 1 | Comparative Example 2 | Comparative Example 3 | Comparative Example 4 |
|---|---|---|---|---|---|
| GIS zeolite |  | Production Example 1 | Production Example 1 | Production Example 1 | Production Example 1 |
| Shape of formed body |  | Cylinder | Cylinder | Cuboid | Cylinder |
| Apparent density $d_a$ | $g/cm^3$ | 0.7 | 0.74 | 0.74 | 0.70 |
| Bulk density $d_b$ | $g/cm^3$ | 0.441 | 0.466 | 0.385 | 0.455 |
| True density dt | $g/cm^3$ | 2.31 | 2.31 | 2.31 | 2.42 |
| Apparent density $d_a$/True density dt | - | 0.30 | 0.32 | 0.32 | 0.29 |
| Bulk density $d_b$/True density dt | - | 0.19 | 0.20 | 0.17 | 0.19 |

(continued)

|  | | | Comparative Example 1 | Comparative Example 2 | Comparative Example 3 | Comparative Example 4 |
|---|---|---|---|---|---|---|
| GIS zeolite | | | Production Example 1 | Production Example 1 | Production Example 1 | Production Example 1 |
| Shape of formed body | | | Cylinder | Cylinder | Cuboid | Cylinder |
| Evaluation of adsorption iso-ther m | Amount of adsorption of $CO_2$ | $cm^3/g$ | 62.5 | 62.6 | 57.5 | 74.0 |
| | Amount of adsorption of $CH_4$ | $cm^3/g$ | 4.8 | 4.9 | 4.5 | 5.6 |
| | Amount of adsorption of $N_2$ | $cm^3/g$ | - | - | - | - |
| | Adsorption selectivity ($CO_2/CH_4$) | | 13.0 | 12.8 | 12.8 | 13.2 |
| | Adsorption selectivity ($CO_2/N_2$) | | - | - | - | - |
| Evaluation | Degree of weight reduction | - | 0.09 | 0.03 | 0.65 | 0.03 |
| | Powdering rate | % by mass | 90 | 100 | 12 | 100 |
| | Powdering rate after exposure to high temperature | % by mass | 95 | 100 | 100 | 100 |
| | Recovery purity $CO_2$ | % by volume | 95.6 | 95.9 | 94.8 | 95.7 |
| | Recovery rate $CH_4$ | % by volume | 96.9 | 97.1 | 96.3 | 97.0 |
| | Pressure loss | kPa | 11.0 | 10.9 | 6.29 | 18.5 |

Industrial Applicability

The zeolite formed body according to the present invention has industrial applicability to separating agents or separation membranes for various gases and liquids, electrolyte membranes for fuel cells and the like, fillers of various resin formed bodies, membrane reactors, catalysts for hydrocracking, alkylation and the like, catalyst carriers for carrying metals, metal oxides, and the like, adsorbents, desiccants, detergent aids, ion exchangers, waste water treatment agents, fertilizers, food additives, cosmetic additives, and the like.

Reference Signs List

2 adsorption system
21 container
23 filter
24 zeolite formed body
100 purified gas production system
1 gas mixture supply line
11 flowmeter
12 moisture meter
13 component analyzer
3a,3b carbon dioxide adsorption tower
31a,31b fixed bed
5 carbon dioxide recovery line

53a,53b manometer
51 flowmeter
52 moisture meter
54 component analyzer
7 second component gas recovery line
71 flowmeter
72 moisture meter
73 component analyzer
9 pressure reduction device
AV1,AV2,AV3,AV4 automatic valve
1000 gas separation performance evaluation system
1005 starting material gas tank
1006 mass flow controller
1007 constant-temperature bath
1008 container
1009 mass flowmeter
1010 $CO_2$ concentration meter
1011 pressure reduction device

**Claims**

1. A zeolite formed body comprising a zeolite capable of adsorbing carbon dioxide, wherein the zeolite formed body has an apparent density $d_a$ of 0.75 or more.

2. The zeolite formed body according to claim 1, wherein the zeolite has a carbon dioxide adsorption capacity of 10 cm$^3$/g or more.

3. The zeolite formed body according to claim 1, wherein a ratio of apparent density $d_a$/true density dt in the zeolite formed body is 0.36 or more.

4. The zeolite formed body according to claim 1, wherein a ratio of bulk density $d_b$/true density dt in the zeolite formed body is 0.25 or more.

5. The zeolite formed body according to claim 1, wherein an adsorption selectivity in terms of carbon dioxide adsorption capacity/second component gas adsorption capacity into the zeolite is 10 or more.

6. The zeolite formed body according to claim 1, wherein the zeolite is a GIS-type zeolite.

7. The zeolite formed body according to claim 6, wherein the GIS-type zeolite has a silica/alumina ratio of 3.40 or more.

8. The zeolite formed body according to claim 6, comprising potassium or lithium as cationic species in the GIS-type zeolite.

9. The zeolite formed body according to claim 8, wherein a ratio (Z/T) of a total value (Z) of amount of substance of potassium and lithium to a total value (T) of amount of substance of alkali metals in the GIS-type zeolite is 0.05 or more.

10. The zeolite formed body according to claim 6, comprising a GIS-type zeolite satisfying (a + d)/(b + c) > 0.192, wherein area intensities of peaks assigned to Q4(3Al), Q4(2Al), Q4(1Al), and Q4(0Al) observed in a $^{29}$Si-MAS-NMR spectrum are respectively defined as a, b, c, and d.

11. The zeolite formed body according to claim 1, comprising a carrier.

12. The zeolite formed body according to claim 11,

wherein the carrier comprises an inorganic binder and an organic binder.

13. The zeolite formed body according to claim 11,
wherein a total content of the carrier is 1 to 99% by mass based on a total amount (100% by mass) of the zeolite formed body.

14. The zeolite formed body according to claim 1, having a degree of weight reduction per 1.2 g under conditions of 300°C and 2 hours, of 1.0 or less.

15. The zeolite formed body according to claim 1, having an aspect ratio of 1 to 10.

16. The zeolite formed body according to claim 1, having a cylindrical shape.

17. The zeolite formed body according to claim 16, having a length of 3 mm or more and 30 mm or less and a diameter of 1 mm or more and 30 mm or less.

18. The zeolite formed body according to claim 1, having a spherical shape.

19. The zeolite formed body according to claim 18, having a diameter of 3 mm or more and 10 mm or less.

20. An adsorption system comprising the zeolite formed body according to any one of claims 1 to 19.

21. A method for producing a purified gas, comprising a separation step of separating one or more selected from the group consisting of $CO_2$, $H_2O$, He, Ne, $Cl_2$, $NH_3$, and HCl from a mixture including two or more gases selected from the group consisting of $H_2$, $N_2$, $O_2$, Ar, CO, and hydrocarbon, by use of the adsorption system according to claim 20.

22. The method for producing a purified gas according to claim 21, wherein the gas separation is performed by a pressure swing-type adsorption-separation method, a temperature swing-type adsorption-separation method, or a pressure/temperature swing-type adsorption-separation method in the separation step.

23. A method for producing a purified gas by separation of carbon dioxide and a second component gas different from carbon dioxide, from a gas mixture including the carbon dioxide and the second component gas, by use of an adsorption tower, the method comprising

an adsorption step of introducing the gas mixture into the adsorption tower and allowing an adsorbent to adsorb carbon dioxide, to take out the second component gas, and
a desorption step of evacuating carbon dioxide from the adsorption tower, to take out the carbon dioxide from the adsorbent, wherein
the adsorption tower is packed with an adsorbent including the zeolite formed body according to any one of claims 1 to 22.

24. The method for producing a purified gas according to claim 23, wherein the adsorption step and the desorption step are each repeatedly performed plural times or more.

25. A method for producing a zeolite formed body, comprising

a starting material mixing step (X) of mixing a zeolite capable of adsorbing carbon dioxide, and a carrier including an inorganic binder and an organic binder, to perform preparation,
a molding treatment step (Y) of subjecting the prepared starting material to molding treatment to thereby obtain a precursor, and
a calcining step (Z) of calcining the precursor, to provide a zeolite formed body.

Figure 1

Figure 2

Figure 3

Figure 4

## INTERNATIONAL SEARCH REPORT

| International application No. |
| --- |
| **PCT/JP2023/012688** |

### A. CLASSIFICATION OF SUBJECT MATTER

***C01B 39/46***(2006.01)i; ***B01D 53/04***(2006.01)i; ***B01D 53/047***(2006.01)i; ***B01J 20/18***(2006.01)i; ***B01J 20/30***(2006.01)i; ***B01J 20/34***(2006.01)i
FI: C01B39/46; B01D53/04 220; B01D53/047; B01J20/18 B; B01J20/30; B01J20/34 H; B01J20/34 Z

According to International Patent Classification (IPC) or to both national classification and IPC

### B. FIELDS SEARCHED

Minimum documentation searched (classification system followed by classification symbols)

C01B39/46; B01D53/04; B01D53/047; B01J20/18; B01J20/30; B01J20/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2020-514024 A (EXXONMOBIL UPSTREAM RES CO) 21 May 2020 (2020-05-21) claims 1-24, paragraph [0003], [0021]-[0022], [0035], [0044], fig. 2 | 25 |
| A | | 1-24 |
| A | WO 2019/202933 A1 (ASAHI KASEI KABUSHIKI KAISHA) 24 October 2019 (2019-10-24) entire text, all drawings | 1-25 |
| A | WO 2018/110559 A1 (ASAHI KASEI KABUSHIKI KAISHA) 21 June 2018 (2018-06-21) entire text, all drawings | 1-25 |
| A | JP 2011-255376 A (TOSOH CORP) 22 December 2011 (2011-12-22) entire text | 1-25 |
| A | KR 10-2021-0061509 A (POSTECH RESEARCH AND BUSINESS DEVELOPMENT FOUNDATION) 28 May 2021 (2021-05-28) entire text, all drawings | 1-25 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 June 2023** | **27 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 501 851 A1**

| INTERNATIONAL SEARCH REPORT<br>Information on patent family members | | International application No.<br>**PCT/JP2023/012688** |
|---|---|---|

| Patent document<br>cited in search report | Publication date<br>(day/month/year) | Patent family member(s) | Publication date<br>(day/month/year) |
|---|---|---|---|
| JP 2020-514024 A | 21 May 2020 | US 2018/0169565 A1<br>claims 1-24, paragraphs<br>[0006], [0039]-[0040], [0055],<br>[0066], fig. 2<br>WO 2018/118361 A1<br>EP 3558490 A1<br>CN 110099730 A<br>KR 10-2019-0097233 A | |
| WO 2019/202933 A1 | 24 October 2019 | US 2020/0223706 A1<br>entire text, all drawings<br>EP 3712112 A1<br>CN 111051242 A | |
| WO 2018/110559 A1 | 21 June 2018 | US 2019/0039045 A1<br>entire text, all drawings<br>CN 108495813 A | |
| JP 2011-255376 A | 22 December 2011 | US 6537348 B1<br>entire text<br>EP 1142622 A2 | |
| KR 10-2021-0061509 A | 28 May 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019202933 A